# EUROPEAN PATENT APPLICATION

(11) **EP 1 804 445 A1**
(43) Date of publication of application: **04.07.2007**
(21) Application number: 05736485.3
(22) Date of filing: 28.04.2005
(51) Int. Cl.: H04L 12/66

(54) **TUNNEL DEVICE, RELAY DEVICE, TERMINAL DEVICE, CALL CONTROL SYSTEM, IP TELEPHONE SYSTEM, CONFERENCE DEVICE, AND THEIR CONTROL METHOD AND PROGRAM**

(30) Priority: 30.09.2004 JP 2004288221
(71) Applicant: AdIn Research, Inc., Tokyo 1020094 (JP)
(72) Inventor: NAKAMURA, Ken c/o AdIn Research, Inc., Chiyoda-ku Tokyo 1020094 (JP); YAMAWAKI, Yuji c/o AdIn Research, Inc., Chiyoda-ku Tokyo 1020094 (JP)
(74) Representative: Wise, Stephen James
(86) International application number: PCT/JP2005/008211
(87) International publication number: WO 2006/038336

(57) **Abstract**

For communications between terminals in different FWs, tunnel devices (T1 and T3)in the individual FWs perform a call control and a voice packet transmission via a relay device (T2) outside of the FWs, so that communications can be made by the transmissions of voice packets and so on between the terminals even in the case of a Symmetric NAT. A voice packet transmission route such as an RTP between the terminals is set not via the tunnel devices but as a direct route (i.e., a straight route) so that bottlenecks in the tunnels can be resolved. It is possible through the tunnels to provide the technique of an IP telephone for transmitting the voice packets even in the case of the Symmetric NAT.

## Description

### TECHNICAL FIELD

The present invention relates to IP telephone technologies for transmitting speech packets through a tunnel even in symmetric NAT.

### BACKGROUND ART

### [Outline of IP Telephone]

In recent years, with developments of information processing and communication technologies centered on the Internet and personal computers, the IP telephone technology is rapidly becoming increasingly popular for purposes of effective utilization, integration, simplification of facilities, a reduction in cost, and the like. The IP telephone is a telephone which employs the IP (Internet Protocol) network for a connection line, and is centered on the VoIP technology. The VoIP is a technology for transmitting digitized packets through the IP network. Protocols typically used therein include SIP (Session Initiation Protocol) for controlling calls related to origination and termination, H.323, RTP (Real-time Transport Protocol) for transmitting speech packets in a streaming form, and the like.

For example, in a combination of SIP-based call control and RTP-based packet transmission, an SIP server exchanges call control messages with each of source and destination terminals to conduct call control such as the start, end and the like of a call in response to manipulations associated with origination, response, termination and the like on each of the terminals. In this event, each terminal uses a different port number for RTP-based speech packet transmission, other than a 5060 port for exchanging the call control messages. In this connection, RTP is generally used together with RTCP in a set.

Preliminarily, a transmission port and a reception port for use in speech packet transmission in this way are collectively called "speech ports." Generally, in one call, two sets of opposing transmission ports and reception ports are preferably used for avoiding collisions of processing and smoothing transmissions/receptions, where one reception port for transmission and one reception port for reception may be determined for use by each terminal in accordance with previously set numerical values such as default, or on the fly from among several tens of thousands of free port numbers as appropriate. Their speech port numbers (transmission port number and reception port number) are transmitted to the respective partners by the SIP server in response to a call control message, while RTP-based speech packets are directly transmitted between the terminals without the intervention of the SIP server. It should be noted that in this application, the "terminal" is synonymous with a "terminal device."

### [NAT and Firewall]

Incidentally, when an attempt is made to use the IP telephone not only within a local LAN such as that within business premises but also through the Internet, a so-called NAT traversal (firewall traversal) problem arises. NAT (Network Address Translation) is a function for principally bidirectionally translating global IP addresses on the Internet assigned to organizations such as enterprises, schools, public institutions to/from private IP addresses used within LAN of each organization, and is implemented in ADSL or optical-fiber based modems and the like, together with a router function, or is practiced as a function of an independent dedicated firewall device and the like.

At the beginning, NAT was mainly intended for countermeasures to exhaustion of a limited number of global IP addresses due to the proliferation of the Internet, but in recent years, the importance has been placed on relationship to the firewall for ensuring the security because the security problem has been strongly recognized. The firewall (also called "FW" as the case may be) is a mechanism for protecting LANs against malicious unauthorized invasions and attacks from the internet which is utilized by an indefinite number of users. NAT per se has a firewall effect to certain degree. This is because private IP address and port numbers (also called "identification information" as the case may be) used by terminals such as personal computers and the like located within a LAN are converted to global IP addresses and different port numbers before they are presented to the Internet (also called "to WAN" as the case may be) to conceal the network configuration within the LAN, the number of terminals, identification information and the like to the outside.

In addition to the above, as the firewall, NAT ensures the security for the LAN through so-called packet filtering which prohibits or limits communications in accordance with the direction of communications (out-to-in or in-to-out), IP addresses, a range thereof, port numbers on the WAN and LAN side and a range thereof, other patterns and the like. In other words, the "firewall" used herein refers to a firewall in a broader sense which includes at least one of the packet filtering which is a firewall in a narrow sense, and NAT.

### [Details on NAT Traversal Problem]

When viewed from applications such as the IP telephone and the like, the NAT traversal problem is basically the same as firewall traversal which is a term used when NAT constitutes a firewall, router traversal and the like, and may be summarized as follows. Consider, for example, a scenario in which a source terminal notifies a destination terminal of identification information including a speech port number intended for use in RTP-based packet transmission through an SIP server in SIP-based call control. However, the identification information on the source terminal transmitted herein is exclusive only within a LAN associated with the source side, and is actually converted and corresponded to different one on the WAN side when it passes through FW. Specifically, since the speech port spontaneously declared by the terminal to the SIP server is converted to a different port on the WAN side, the declared identification information does not allow for communications from the outside such as the destination terminal to that speech port, and disables normal call control and calls.

### [Solutions to NAT Traversal Problem]

While a variety of proposals have been made to the NAT traversal problem as described above (for example, Patent Document 1: JP-A-2004-523828), one solution is the utilization of STUN (Simple Traversal of UDP through NATs). Fig. 12 shows an exemplary utilization of STUN, where communication control lines for call control messages and the like based on SIR or the like are indicated by broken line (for example, port number 5060), data lines (for example, a port number 10000) for speech packets based on RTP or the like are indicated by solid lines, and flows of packets are indicated by one-dot chain lines for communications with an STUN server to identify WAN side identification information on terminals.

In this example, at the outset of or prior to SIP-based communications or the like, a source terminal installed in a private address space within FW2 transmits a communication packet (preliminarily called the "test packet") from a reception port and a transmission port intended for use in speech packet transmissions to a predetermined port number (for example, 5080) ofapredetermined STUN server installed in a global address space outside FW2. In response, source identification information contained in a header of the test packet is converted to one associated with the WAN by the NAT, and the STUN server receives and reads the converted WAN side identification information, and notifies the source terminal of the converted WAN side identification information by returning a response packet which contains the converted WAN side identification information in a main body instead of a header to the source terminal.

At this time, the source terminal can eventually acquire the WAN side identification information relevant to the transmission port and reception port of the terminal itself, and notifies the destination terminal of the WAN side identification information carried on a call control message through the SIP server (broken line), thereby allowing the destination terminal to know the WAN side identification information relevant to the speech ports of the source terminals. Though not shown, the same applies to the opposite direction, where the source terminal is allowed to know WAN side identification information relevant to speech ports of the destination terminal.

Next required is to force FW, which prevents communications to the respective terminals from the outside, to admit transmissions and receptions of packets between the speech ports of the respective terminals, i.e., from two opposing sets of transmission ports to the reception ports.

### [Type of NAT]

Here, when the effects of the firewall are expected, basic filtering conditions in the NAT are generally set to permit communications from the inside to the outside, but prohibit in principle communications from the outside to the inside in the first place. However, in the second place, when a communication is made from an IP address and a port of an internal terminal to the outside, an IP address and a port number on the WAN side are corresponded to the internal IP address and port number to open a route, permitting out-in communications in the opposite direction for a predetermined time (for example, several tens of seconds to several hundreds of seconds, or the like depending on particular security policies), if on the same route.

In this event, the following three types of NATs can be listed depending on the relationship with the external IP address and port of the destination in the original in-out communication, and a range in which the out-in communication is permitted in the opposite direction:
1. Full Cone NAT:
   External sources are not limited irrespective of the IP address and port number.
2. Restricted Cone NAT:
   External sources should present a consistent IP address with the port number laid aside.
3. Port-Restricted Cone NAT:
   External sources should present both the IP address and port number.
In these three types, communications from the same internal IP address and port number are commonly assigned to the same port number on the WAN side whichever external destination it is directed to.

### [UDP Hole Punching]

According to the filtering conditions as described above, transmissions from a transmission port to desired destinations are free without problem, where each terminal is only required to pass necessary communications from the outside to the reception port through FW. An approach for forcing FW to admit the arrival of necessary packets to a port is UDP hole punching.

This approach utilizes the fact that out-in communications are permitted at least from the same destination of in-out communications in the three types of NATs, and is performed in a certain set of reception port and transmission port in the following manner. First, as previously described, respective terminals are mutually aware of WAN side identification information on a reception port and a transmission port of the counterpart through STUN and SIP messages, so that each terminal transmits some packet from its own reception port to the transmission port of the counterpart. This packet is preliminarily called the "hole punching packet."

The hole punching packet must be transmitted on another occasion separately from the test packet unless the FW of the counterpart is Full Cone NAT. The transmission of the hole punching packet from the reception port of one terminal to the transmission port of the other is intended to enable out-in communications in the opposite direction to pass through the same route by once passing in-out communications. More specifically, by recording in the FW of the source terminal the in-out communication through the hole punching packet in the direction opposite to the essential one, i.e., from the reception port of the source terminal to the transmission port of the destination, a setting is temporarily set in the FW for passing speech packets in one piece in the out-in communication in the opposite direction, i.e., from the transmission port of the counterpart which is the destination of the hole punching packet to the reception port of the terminal which is the source of the hole punching packet.

Accordingly, when the FW of the counterpart is the Restricted Cone NAT or Port-Restricted Cone NAT, the hole punching packet is blocked by the FW of the counterpart, which however does not cause any problem. Because the hole punching packet is transmitted for the hole punching which can be performed only from the inside. It is a work performed from the destination terminal from the inside to punch a hole through the FW of the counterpart such that packets from the transmission port of the source terminal can access to the reception port of the counterpart.

When the foregoing hole punching is performed from the reception port in both two sets of opposing transmission ports and reception ports, packets such as RTP can be mutually received from the counterparts, thus establishing bidirectional speech transmissions.

### DISCLOSURE OF THE INVENTION

However, in the prior art as described above, a terminal must support STUN as well, in addition to a call control server such as SIP, burdens and conditions for introduction and operations are inconveniently complicated. Also, there is another type of NAT, which is Symmetric NAT, in addition to the aforementioned three types, and when any FW is this Symmetric NAT, the NAT traversal communications are disabled in the prior art which uses the hole punching.

Specifically, unlike the three types described above, in the Symmetric NAT, even communications from the same internal IP address and port number are assigned different port numbers on the WAN side if they differ in destination from one another. Therefore, when the FW of the source terminal is the Symmetric NAT, a WAN side port number associated with a packet transmission to STUN is different from a WAN side port number associated with a hole punching packet transmission even if they are from the same speech port when viewed from the terminal.

This means that the WAN side port number conveyed to the counterpart through the STUN and SIP server is different from an actually hole punched WAN side port number, with the result that RTP-based packets of speech and the like from the counterpart is continuously blocked by the FW of the source terminal to result in a uni-direction speech state in which the speech of the counterpart cannot be heard.

The present invention is intended to solve the problems of the prior art as described above, and it is an object of the invention to provide IP telephone technologies for transmitting speech packets through a tunnel even with the Symmetric NAT. It is another object of the invention to maximally pass speech packets through a direct transmission path to reduce a load on a tunnel in FW traversal calls except for the Symmetric NAT.

To achieve the above objects, a first invention of the present application provides a tunnel device comprising a connection unit with a communication network, and a control unit for controlling a communication through the connection unit, and disposed inside of a firewall for performing a firewall traversal communication through tunneling, wherein the tunnel device comprises tunnel means for mediating a communication with another tunnel device installed inside of another firewall by way of a predetermined relay device installed outside of the firewall, by the connection unit and control unit, and call control means for processing call control for a call by an IP call terminal located inside of each firewall, by the connection unit and control unit. The tunnel device is characterized in that the call control means comprises at least (1) means for accepting a call origination request from a terminal inside of the same firewall as the tunnel device to a terminal inside of other firewall to mediate the request to the outside of the firewall by the tunnel means, (2) means for receiving a call reception request from the outside to the inside of the firewall by the tunnel means to mediate the request to a destination terminal, and (3) means for mediating transmission of speech packets by the tunnel means, in accordance with a predetermined protocol and port number in a call between terminals inside of different firewalls, and means for mediating transmission of call origination/reception requests and speech packets in a call between terminals inside of the same firewall.

A twenty fifth invention of the present application, which is assumed from a view point that the first invention is implemented in a method, provides a method of controlling a tunnel device comprising a connection unit with a communication network, and a control unit for controlling a communication through the connection unit, and disposed inside of a firewall for performing a firewall traversal communication through tunneling, wherein the method comprises tunnel processing for mediating a communication with another tunnel device installed inside of another firewall by way of a predetermined relay device installed outside of the firewall, by the connection unit and control unit, and call control processing for processing call control for a call by an IP call terminal located inside of each firewall, by the connection unit and control unit. The method is characterized in that the call control processing comprises at least (1) processing for accepting a call origination request from a terminal inside of the same firewall as the tunnel device to a terminal inside of other firewall to mediate the request to the outside of the firewall by the tunnel processing, (2) processing for receiving a call reception request from the outside to the inside of the firewall by the tunnel means to mediate the request to a destination terminal, and (3) processing for mediating transmission of speech packets by the tunnel processing, in accordance with a predetermined protocol and port number in a call between terminals inside of different firewalls, and processing for mediating transmission of call origination/reception requests and speech packets in a call between terminals inside of the same firewall.

A forty ninth invention of the present application, which is from a view point that the first and twenty fifth inventions are implemented in a computer program, provides a program for controlling a tunnel device comprising a connection unit with a communication network, and a control unit for controlling a communication through the connection unit, and disposed inside of a firewall for performing a firewall traversal communication through tunneling, wherein the program causing the connection unit and control unit to perform tunnel processing for mediating a communication with another tunnel device installed inside of another firewall by way of a predetermined relay device installed outside of the firewall, by the connection unit and control unit, and call control processing for processing call control for a call by an IP call terminal located inside of each firewall. The program is characterized in that the call control processing comprises at least (1) processing for accepting a call origination request from a terminal inside of the same firewall as the tunnel device to a terminal inside of other firewall to mediate the request to the outside of the firewall by the tunnel processing, (2) processing for receiving a call reception request from the outside to the inside of the firewall by the tunnel processing to mediate the request to a destination terminal, and (3) processing for mediating transmission of speech packets by the tunnel processing, in accordance with a predetermined protocol and port number in a call between terminals inside of different firewalls, and processing for mediating transmission of call origination/reception requests and speech packets in a call between terminals inside of the same firewall.

A second invention of the present application is characterized, in the tunnel device according to the first invention, that the call control means directly or indirectly provides a counterpart terminal with identification information including a private IP address and a port number of a port which is attempted by each terminal for speech packet transmission for setting a direct speech packet transmission path between the terminals when the terminals which attempt to make a call to each other are located inside of the same firewall.

A twenty sixth invention, which is assumed from a viewpoint that the second invention is implemented in a method, is characterized, in the method of controlling a tunnel device according to the twenty fifth invention, in that the call control processing directly or indirectly provides a counterpart terminal with identification information including a private IP address and a port number of a port which is attempted by each terminal for speech packet transmission for setting a direct speech packet transmission path between the terminals when the terminals which attempt to make a call to each other are located inside of the same firewall.

A fiftieth invention of the present application, which is assumed from a viewpoint that the second and twenty sixth inventions are implemented in a computer program, is characterized, in the program for controlling a tunnel device according to the forty ninth invention, in that the call control processing directly or indirectly provides a counterpart terminal with identification information including a private IP address and a port number of a port which is attempted by each terminal for speech packet transmission for setting a direct speech packet transmission path between the terminals when the terminals which attempt to make a call to each other are located inside of the same firewall.

A third invention of the present application provides a relay device comprising a connection unit with a communication network, and a control unit for controlling a communication through the connection unit, and disposed outside of a firewall for relaying a firewall traversal communication through tunneling, wherein the relay device comprises relay means for relaying a communication between predetermined respective tunnel devices installed inside of respective firewalls, by the connection unit and control unit, and call control means for processing call control for a call by an IP call terminal located inside of each firewall, by the connection unit and control unit. The relay device is characterized in that the call control means comprises at least means for relaying transmission of call origination/reception requests and speech packets for a call, for each of the tunnel devices corresponding to the respective terminals, using the relay means, in a call between terminals inside of different firewalls.

A twenty seventh invention of the present application, which is assumed from a viewpoint that the third invention is implemented in a method, provides a method of controlling a relay device comprising a connection unit with a communication network, and a control unit for controlling a communication through the connection unit, and disposed outside of a firewall for relaying a firewall traversal communication through tunneling, wherein the method comprises relay processing for relaying a communication between predetermined respective tunnel devices installed inside of respective firewalls, by the connection unit and control unit, and call control processing for processing call control for a call by an IP call terminal located inside of each firewall, by the connection unit and control unit. The method is characterized in that the call control processing includes at least processing for relaying transmission of call origination/reception requests and speech packets for a call, for each of the tunnel devices corresponding to the respective terminals, using the relay processing, in a call between terminals inside of different firewalls.

A fifty first invention of the present application, which is assumed from a viewpoint that the third and twenty seventh inventions are implemented in a computer program, provides a program for controlling a relay device comprising a connection unit with a communication network, and a control unit for controlling a communication through the connection unit, and disposed outside of a firewall for relaying a firewall traversal communication through tunneling, wherein the program causes the connection unit and control unit to perform relay processing for relaying a communication between predetermined respective tunnel devices installed inside of respective firewalls, by the connection unit and control unit, and call control processing for processing call control for a call by an IP call terminal located inside of each firewall, by the connection unit and control unit. The program is characterized in that the call control processing includes at least processing for relaying transmission of call origination/reception requests and speech packets for a call, for each of the tunnel devices corresponding to the respective terminals, using the relay processing, in a call between terminals inside of different firewalls.

A call control system according to a fourth invention of the present application is characterized by comprising the tunnel device according to the first or second invention, and the relay device according to the third invention.

A method of controlling a call control system according to a twenty eighth invention of the present application, which is assumed from a viewpoint that the fourth invention is implemented in a method, is characterized by combining the method of controlling a tunnel device according to the twenty fifth or twenty sixth invention, and the method of controlling relay device according to the twenty seventh invention.

A program for controlling a call control system according to a fifty second invention of the present application, which is assumed from a viewpoint that the fourth and twenty eighth inventions are implemented in a computer program, is characterized by combining the program for controlling a tunnel device according to the forty ninth or fiftieth invention, and the program for controlling relay device according to the fifty first invention.

A fifth invention of the present application provides a IP call terminal device comprising manipulating means, transmitting means, receiving means, a connection unit with a communication network, and a control unit for conducting control including a communication through the control unit as well as encoding and decoding of speech, and installed inside of a firewall for making a call beyond the firewall. The terminal device is characterized in that the control means comprises call processing means which serves as (1) means for accepting at least manipulations of call origination, call reception response, and call termination from the manipulating means, (2) means for transmitting and receiving call control information including call origination/reception requests to and from a predetermined tunnel device installed inside of the same firewall in accordance with a predetermined protocol and port number, by the connection unit for a call with other terminals located inside of the same firewall and inside of a different firewall, (3) means for receiving and transmitting speech packets associated with a transmission in a call with a terminal inside of a different firewall in accordance with the protocol through the tunnel device, and (4) means for performing the encoding and decoding processing during a call.

A twenty ninth invention of the present application, which is assumed from a viewpoint that the fifth invention is implemented in a method, provides a method of controlling a terminal device comprising manipulating means, transmitting means, receiving means, a connection unit with a communication network, and a control unit for conducting control including a communication through the control unit as well as encoding and decoding of speech, and installed inside of a firewall for making a call beyond the firewall. The method is characterized by performing call processing by the control unit, including (1) processing for accepting at least manipulations of call origination, call reception response, and call termination from the manipulating means, (2) processing for transmitting and receiving call control information including call origination/reception requests to and from a predetermined tunnel device installed inside of the same firewall in accordance with a predetermined protocol and port number, by the connection unit for a call with other terminals located inside of the same firewall and inside of a different firewall, (3) processing for receiving and transmitting speech packets associated with a transmission in a call with a terminal inside of a different firewall in accordance with the protocol through the tunnel device, and (4) processing for performing the encoding and decoding processing during a call.

A fifty third invention of the present invention, which is assumed from a viewpoint that the fifth and twenty ninth inventions are implemented in a computer program, provides a program for controlling a terminal device comprising manipulating means, transmitting means, receiving means, a connection unit with a communication network, and a control unit for conducting control including a communication through the control unit as well as encoding and decoding of speech, and installed inside of a firewall for making a call beyond the firewall. The program is characterized by causing the control unit to perform call control processing including (1) processing for accepting at least manipulations of call origination, call reception response, and call termination from the manipulating means, (2) processing for transmitting and receiving call control information including call origination/reception requests to and from a predetermined tunnel device installed inside of the same firewall in accordance with a predetermined protocol and port number, by the connection unit for a call with other terminals located inside of the same firewall and inside of a different firewall, (3) processing for receiving and transmitting speech packets associated with a transmission in a call with a terminal inside of a different firewall in accordance with the protocol through the tunnel device, and (4) processing for performing the encoding and decoding processing during a call.

An IP telephone system according to a sixth invention of the present application is characterized by comprising the tunnel device according to the first or second invention, or the call control system according to the fourth invention, and the terminal device according to the fifth invention.

A method of controlling an IP telephone system according to a thirtieth invention of the present application, which is assumed from a viewpoint that the sixth invention is implemented in a method, is characterized by combining the method of controlling a tunnel device according to the twenty fifth or twenty sixth invention, or the method of controlling a call control system according to the twenty eighth invention, and the method of controlling a terminal device according to the twenty ninth invention.

A program for controlling an IP telephone system according to a fifty fourth invention of the present application, which is assumed from a viewpoint that the sixth and thirtieth inventions are implemented in a computer program, is characterized by combining the program for controlling a tunnel device according to the forty ninth or fiftieth invention, or the program for controlling a call control system according to the fifty second invention, and the program for controlling a terminal device according to the fifty third invention.

In the present invention, for a call between terminals inside of different firewalls, tunnel devices inside of the respective firewalls mutually conduct call control and transmit speech packets by way of a relay device outside of the firewalls, thereby making it possible to make a call through transmission of speech packets and the like between the terminals even in the case of Symmetric NAT.

In a second, a twenty sixth, and a fiftieth inventions of the present application, terminals which attempt to make a call inside of the same firewall are supplied with their respective IP addresses and port numbers conveyed from the tunnel device, and are forced to transmit speech packets such as RTP and the like directly, rather than by way of a tunnel, whereby the tunnel device is correspondingly less likely to be a bottleneck on communications, thus advantageously making it possible to effectively avoid instable speech qualities such as interrupted speech and the like due to load concentration, and limitations in the number of simultaneous connections.

A seventh invention of the present application is characterized, in the relay device according to the third invention, is characterized in that when terminals attempting to make a call are located inside of different firewalls from each other, the call control means receives a packet transmitted by each terminal from a port attempted for use thereby in speech packet transmission beyond the firewall to acquire identification information including a firewall outside port number of the port, and notifies respective counterpart terminals of the identification information using the relay means, in order to set a direct speech packet transmission path between these terminals.

A thirty first invention of the present application, which is assumed from a viewpoint that the seventh invention is implemented in a method, is characterized, in the method of controlling a relay device according to the twenty seventh invention, in that when terminals attempting to make a call are located inside of different firewalls from each other, the call control processing receives a packet transmitted by each terminal from a port attempted for use thereby in speech packet transmission beyond the firewall to acquire identification information including a firewall outside port number of the port, and notifies respective counterpart terminals of the identification information using the relay processing, in order to set a direct speech packet transmission path between these terminals.

A fifty fifth invention of the present application, which is assumed from a viewpoint that the seventh and thirty first inventions are implemented in a computer program, is characterized, in the program for controlling a relay device according to the fifth first invention, in that when terminals attempting to make a call are located inside of different firewalls from each other, the call control processing receives a packet transmitted by each terminal from a port attempted for use thereby in speech packet transmission beyond the firewall to acquire identification information including a firewall outside port number of the port, and notifies respective counterpart terminals of the identification information using the relay processing, in order to set a direct speech packet transmission path between these terminals.

An eighth invention of the present application is characterized, in the terminal device according to the fifth invention, in that the call processing means further (1) accepts at least manipulations of call origination, call reception response, and call termination from the manipulating means, (2) in a call with another terminal located inside of a different firewall, transmits a packet to a predetermined relay device installed outside of the firewall from a port attempted for use in speech packet transmission with the terminal by the connection unit, thereby notifying WAN identification information of the terminal device including a firewall outside port number of the port, (3) sets a direct speech packet transmission path in accordance with WAN side identification information of a counterpart terminal transmitted in accordance with a predetermined protocol and port number by way of a predetermined tunnel device installed inside of the same firewall, and (4) performs the encoding and decoding processing during a call, by the control unit.

A thirty second invention of the present application, which is assumed from a viewpoint that the eighth invention is implemented in a method, is characterized, in the method of controlling a terminal device according to the twenty ninth invention, in that the call processing further performs, by the control unit, (1) accepts at least manipulations of call origination, call reception response, and call termination from the manipulating means, (2) in a call with another terminal located inside of a different firewall, transmits a packet to a predetermined relay device installed outside of the firewall from a port attempted for use in speech packet transmission with the terminal by the connection unit, thereby notifying WAN identification information of the terminal device including a firewall outside port number of the port, (3) sets a direct speech packet transmission path in accordance with WAN side identification information of a counterpart terminal transmitted in accordance with a predetermined protocol and port number by way of a predetermined tunnel device installed inside of the same firewall, and (4) performs the encoding and decoding processing during a call.

A fifty sixth invention of the present application, which is assumed from a viewpoint that the eighth and thirty second inventions are implemented in a computer program, is characterized, in the program for controlling a terminal device according to the fifth third invention, in that the call processing further performs, by the control unit, (1) accepts at least manipulations of call origination, call reception response, and call termination from the manipulating means, (2) in a call with another terminal located inside of a different firewall, transmits a packet to a predetermined relay device installed outside of the firewall from a port attempted for use in speech packet transmission with the terminal by the connection unit, thereby notifying WAN identification information of the terminal device including a firewall outside port number of the port, (3) sets a direct speech packet transmission path in accordance with WAN side identification information of a counterpart terminal transmitted in accordance with a predetermined protocol and port number by way of a predetermined tunnel device installed inside of the same firewall, and (4) performs the encoding and decoding processing during a call.

An IP telephone system according to a ninth invention of the present application is characterized by comprising the relay device according to the seventh invention, and the terminal device according to the eighth invention.

A method of controlling an IP telephone system according to a thirty third invention of the present application, which is assumed from a viewpoint that the ninth invention is implemented in a method, is characterized by combining the method of controlling a relay device according to the thirty first invention, and the method of controlling a terminal device according to the thirty second invention.

A program for controlling an IP telephone system according to a fifty seventh invention of the present application, which is assumed from a viewpoint that the ninth and thirty third inventions are implemented in a computer program, is characterized by combining the program for controlling a relay device according to the fifty fifth invention, and the program for controlling a terminal device according to the fifty sixth invention.

In these aspects (inventions), a load on a tunnel is further reduced by maximally passing speech packets through a direct transmission path in FW traversal calls other than Symmetric NAT. Specifically, by forcing respective terminals which attempt to make a call inside of different firewalls from each other to transmit packets to a relay device beyond the firewalls, whereby the relay device confirms a firewall outside port number of a speech port of each terminal and conveys the firewall outside port numbers to the respective counterparts by way of the tunnel, and forces the terminals to transmit a hole punching packet toward the port number of the counterpart to directly transmit speech packets such as RTP and the like directly, rather than by way of the tunnel. In consequence, the tunnel device is correspondingly less likely to be a bottleneck on communications, thus advantageously making it possible to effectively avoid instable speech qualities such as interrupted speech and the like due to load concentration, and limitations in the number of simultaneous connections.

A tenth invention of the present application is characterized, in the terminal device according to the eighth invention, in that when the control unit detects that a speech packet has reached from the counterpart terminal or that a speech packet does not reach within a predetermined waiting time after notification or receipt of the WAN side identification information, the call processing means notifies the relay device that the speech packet has reached or does not reach in accordance with the predetermined protocol and port number by way of the tunnel device.

A thirty fourth invention of the present application, which is assumed from a viewpoint that the tenth invention is implemented in a method, is characterized, in the method of controlling a terminal device according to the thirty second invention, in that when the control unit detects that a speech packet has reached from the counterpart terminal or that a speech packet does not reach within a predetermined waiting time after notification or receipt of the WAN side identification information, the call processing notifies the relay device that the speech packet has reached or does not reach in accordance with the predetermined protocol and port number by way of the tunnel device.

A fifty eighth invention of the present application, which is assumed from a viewpoint that the tenth and thirty fourth inventions are implemented in a computer program, is characterized, in the program for controlling a terminal device according to the fifth sixth invention, in that when the control unit detects that a speech packet has reached from the counterpart terminal or that a speech packet does not reach within a predetermined waiting time after notification or receipt of the WAN side identification information, the call processing notifies the relay device that the speech packet has reached or does not reach in accordance with the predetermined protocol and port number by way of the tunnel device.

An eleventh invention of the present application is characterized, in the relay device according to the seventh invention, in that when the call control means is not notified from any of the terminal devices which attempt to make a call that the speech packet has reached within the predetermined waiting time, or is notified that the speech packet does not reach, the call control means sets an alternative bypass path by way of the tunnel device for a speech packet transmission path associated with the notification using the relay means.

A thirty fifth invention of the present application, which is assumed from a viewpoint that the eleventh invention is implemented in a method, is characterized, in the method of controlling a relay device according to the thirty first invention, in that when there is no notification from any of the terminal devices which attempt to make a call that the speech packet has reached within the predetermined waiting time, or when there is a notification that the speech packet does not reach, the call control processing sets an alternative bypass path by way of the tunnel device for a speech packet transmission path associated with the notification using the relay processing.

A fifty ninth invention of the present application, which is assumed from a viewpoint that the eleventh and thirty fifth inventions are implemented in a computer program, is characterized, in the program for controlling a relay device according to the fifty fifth invention, in that when there is no notification from any of the terminal devices which attempt to make a call that the speech packet has reached within the predetermined waiting time, or when there is a notification that the speech packet does not reach, the call control processing sets an alternative bypass path by way of the tunnel device for a speech packet transmission path associated with the notification using the relay processing.

An IP telephone system according to a twelfth invention of the present application is characterized by comprising the terminal device according to the tenth invention, and the relay device according to the eleventh invention.

A method of controlling an IP telephone system according to a thirty sixth invention of the present application, which is assumed from a viewpoint that the twelfth invention is implemented in a method, is characterized by combining the method of controlling a terminal device according to the thirty fourth invention, and the method of controlling a relay device according to the thirty fifth invention.

A program for controlling an IP telephone system according to a sixtieth invention of the present application, which is assumed from a viewpoint that the twelfth and thirty sixth inventions are implemented in a computer program, is characterized by combining the program for controlling a terminal device according to the fifth eighth invention, and the program for controlling a relay device according to the fifty ninth invention.

In these aspects (inventions), even when a direct speech packet transmission path cannot be set due to Symmetric NAT or the like, a reliable call can be made irrespective of the type of NAT by setting an alternative bypass path by way of the tunnel device through a tunnel.

A thirteenth invention of the present application is characterized, in the tunnel device according to the first or second invention, by comprising, by the connection unit and control unit, SIP proxy means for communicating with each terminal inside of the firewall using a predetermined second port number as a proxy server of SIP (Session Initiation Protocol), and mediating means for mediating a communication between a terminal which utilizes the protocol and port number and a terminal which utilizes the SIP and the second port number.

A thirty seventh invention of the present application, which is assumed in a viewpoint that the thirteenth invention is implemented in a method, is characterized, in the method of controlling a tunnel device according to the twenty fifth or twenty sixth invention, by comprising, by the connection unit and control unit, SIP proxy processing for communicating with each terminal inside of the firewall using a predetermined second port number as a proxy server of SIP (Session Initiation Protocol), and mediation processing for mediating a communication between a terminal which utilizes the protocol and port number and a terminal which utilizes the SIP and the second port number.

A sixty first invention of the present application, which is assumed from a viewpoint that the thirteenth and thirty seventh inventions are implemented in a computer program, is characterized, in the program for controlling a tunnel device according to the forty ninth or fiftieth invention, by causing the connection unit and control unit to perform SIP proxy processing for communicating with each terminal inside of the firewall using a predetermined second port number as a proxy server of SIP (Session Initiation Protocol), and mediation processing for mediating a communication between a terminal which utilizes the protocol and port number and a terminal which utilizes the SIP and the second port number.

A fourteenth invention of the present application is characterized, in the tunnel device according to the thirteenth invention, in that when the call control means mediates a speech packet transmission in a call with a counterpart terminal inside of a different firewall for a terminal inside of the same firewall, the call control means sets a transmission path between the terminal and the tunnel device by call control using the SIP and second port number and passes by way of the transmission path.

A thirty eighth invention of the present application, which is assumed from a viewpoint that the fourteenth invention is implemented in a method, is characterized, in the method of controlling a tunnel device according to the thirty seventh invention, in that when the call control processing mediates a speech packet transmission in a call with a counterpart terminal inside of a different firewall for a terminal inside of the same firewall, the call control processing sets a transmission path between the terminal and the tunnel device by call control using the SIP and second port number and passes by way of the transmission path.

A sixty second invention of the present application, which is assumed from a viewpoint that the fourteenth and thirty eighth inventions are implemented in a computer program, is characterized, in the program for controlling a tunnel device according to the sixty first invention, in that when the call control processing mediates a speech packet transmission in a call with a counterpart terminal inside of a different firewall for a terminal inside of the same firewall, the call control processing sets a transmission path between the terminal and the tunnel device by call control using the SIP and second port number and passes by way of the transmission path.

A call control system according to a fifteenth invention of the present application is characterized by comprising the relay device according to any of the third, seventh, or eleventh invention, and the tunnel device according to the thirteenth or fourteenth invention.

A method of controlling a call control system according to a thirty ninth invention of the present application, which is assumed from a viewpoint that the fifteenth invention is implemented in a method, is characterized by combining the method of controlling a relay device according to any of the twenty seventh, thirty first, or thirty fifth invention, and the method of controlling a tunnel device according to the thirty seventh or thirty eighth invention.

A program for controlling a call control system according to a sixty third invention of the present application, which is assumed from a viewpoint that the fifteenth and thirty ninth inventions are implemented in a computer program, is characterized by combining the program for controlling a relay device according to any of the fifty first, fifty fifth, or fifty ninth invention, and the program for controlling a tunnel device according to the sixty first or sixty second invention.

In these aspects (inventions), since speech packets can be transmitted/received to/from a terminal set for the SIP in accordance with the conventional SIP inside of the firewall in a communication conforming to the protocol in the present invention or by way of a tunnel, conventional settings and terminals for the SIP can be combined with and used with those of the present invention to enable mutual calls as well, thus further facilitating the introduction of the present invention.

A sixteenth invention of the present application provides a conference device which comprises a connection unit with a communication network, and a control unit for controlling a communication through the connection unit, for mediating a connection of a call among three or more parties in a plurality of terminals. The conference device is characterized in that the control unit comprises (1) manipulation accepting means for accepting at least designation of each participant and a request for start, and manipulations associated with a response to a request or a response to reception, and call termination from terminals of participants including a convocator through the connection unit, (2) setting means for setting a pair of speech packet transmission paths for collecting an uplink speech directly or by way of a tunnel device and for delivering a downlink speech by transmitting and receiving call control information through a direct or an indirect communication with a predetermined tunnel device installed inside of the same firewall or a predetermined relay device installed outside of the firewall for each terminal of each of other participants located inside of the same firewall and inside of different firewalls through the connection unit, (3) combining means for combining speech signals of the respective uplink speeches received from the other respective participant for each combination of the respective participants except for one participant by addition processing, and (4) delivering means for delivering the combined speech signal to a terminal of the one participant through the connection unit.

A fortieth invention of the present application, which is assumed from a viewpoint that the sixteenth invention is implemented in a method, provides a method of controlling a conference device comprising a connection unit with a communication network, and a control unit for controlling a communication through the connection unit, for mediating a connection of a call among three or more parties in a plurality of terminals. The method is characterized by comprising, by the control unit, (1) manipulation accepting processing for accepting at least designation of each participant and a request for start, and manipulations associated with a response to a request or a response to reception, and call termination from terminals of participants including a convocator through the connection unit, (2) setting processing for setting a pair of speech packet transmission paths for collecting an uplink speech directly or by way of a tunnel device and for delivering a downlink speech by transmitting and receiving call control information through a direct or an indirect communication with a predetermined tunnel device installed inside of the same firewall or a predetermined relay device installed outside of the firewall for each terminal of each of other participants located inside of the same firewall and inside of different firewalls through the connection unit, (3) combination processing for combining speech signals of the respective uplink speeches received from the other respective participant for each combination of the respective participants except for one participant by addition processing, and (4) deliver processing for delivering the combined speech signal to a terminal of the one participant through the connection unit.

A sixty fourth invention of the present application, which is assumed from a viewpoint that the sixteenth and fortieth inventions are implemented in a computer program, provides a program for controlling a conference device comprising a connection unit with a communication network, and a control unit for controlling a communication through the connection unit, for mediating a connection of a call among three or more parties in a plurality of terminals. The program is characterized by causing the control unit to perform (1) manipulation accepting processing for accepting at least designation of each participant and a request for start, and manipulations associated with a response to a request or a response to reception, and call termination from terminals of participants including a convocator through the connection unit, (2) setting processing for setting a pair of speech packet transmission paths for collecting an uplink speech directly or by way of a tunnel device and for delivering a downlink speech by transmitting and receiving call control information through a direct or an indirect communication with a predetermined tunnel device installed inside of the same firewall or a predetermined relay device installed outside of the firewall for each terminal of each of other participants located inside of the same firewall and inside of different firewalls through the connection unit, (3) combination processing for combining speech signals of the respective uplink speeches received from the other respective participant for each combination of the respective participants except for one participant by addition processing, and (4) deliver processing for delivering the combined speech signal to a terminal of the one participant through the connection unit.

An IP telephone system according to a seventeenth invention of the present application is characterized by adding the conference device according to the sixteenth invention to one of the tunnel device according to any of the first, second, thirteenth, or fourteenth invention, the relay device according to any of the third, seventh, or eleventh invention, the call control system according to the fourth or fifteenth invention, the terminal device according to any of the fifth, eighth, or tenth invention, and the IP telephone system according to any of the sixth, ninth, or twelfth invention.

A method of controlling an IP telephone system according to a forty first invention of the present application, which is assumed from a viewpoint that the seventeenth invention is implemented in a method, is characterized by adding the conference device according to the fortieth invention to one of the method of controlling a tunnel device according to any of the twenty fifth, twenty sixth, thirty seventh, or thirty eighth invention, the method of controlling a relay device according to any of the twenty seventh, thirty first, or thirty fifth invention, the method of controlling a call control system according to the twenty eighth or thirty ninth invention, the method of controlling a terminal device according to any of the twenty ninth, thirty second, or thirty fourth invention, and the method of controlling an IP telephone system according to any of the thirtieth, thirty third, or thirty sixth invention.

A program for controlling an IP telephone system according to a sixty fifth invention of the present application, which is assumed from a viewpoint that the seventeenth and forty first inventions are implemented in a computer program, is characterized by adding the conference device according to the sixty fourth invention to one of the program for controlling a tunnel device according to any of the forty ninth, fiftieth, sixty first, or sixty second invention, the program for controlling a relay device according to any of the fifty first, fifty fifth, or fifty ninth invention, the program for controlling a call control system according to the fifty second or sixty third invention, the program for controlling a terminal device according to any of the fifty third, fifty sixth, or fifty eighth invention, and the program for controlling an IP telephone system according to any of the fifty fourth, fifty seventh, or sixtieth invention.

In these aspects (inventions), an applicable range of the present invention is further expanded by a call among three parties or more.

An IP telephone system according to an eighteenth invention of the present application is characterized by adding one or two or more firewall devices to one of the tunnel device according to any of the first, second, thirteenth, or fourteenth invention, the relay device according to any of the third, seventh, or eleventh invention, the call control system according to the fourth or fifteenth invention, the terminal device according to any of the fifth, eighth, or tenth invention, and the IP telephone system according to any of the sixth, ninth, twelfth, or sixteenth invention.

A method of controlling an IP telephone system according to a forty second invention of the present application, which is assumed from a viewpoint that the eighteenth invention is implemented in a method, is characterized by adding a method of controlling one or two or more firewall devices to one of the method of controlling a tunnel device according to any of the twenty fifth, twenty sixth, thirty seventh, or thirty eighth invention, the method of controlling a relay device according to any of the twenty seventh, thirty first, or thirty fifth invention, the method of controlling a call control system according to the twenty eighth of thirty ninth invention, the method of controlling a terminal device according to any of the twenty ninth, thirty second, or thirty fourth invention, and the method of controlling an IP telephone system according to any of the thirtieth, thirty third, thirty sixth, or fortieth invention.

A program for controlling an IP telephone system according to a sixty sixth invention of the present application, which is assumed from a viewpoint that the eighteenth and forty second inventions are implemented in a computer program, is characterized by adding a method of controlling one or two or more firewall devices to one of the program for controlling a tunnel device according to any of the forty ninth, fiftieth, sixty first, or sixty second invention, the program for controlling a relay device according to any of the fifty first, fifty fifth, or fifty ninth invention, the program for controlling a call control system according to the fifty second or sixty third invention, the program for controlling a terminal device according to any of the fifty third, fifty sixth, or fifty eighth invention, and the program for controlling an IP telephone system according to any of the fifty fourth, fifty seventh, sixtieth, or sixty fourth invention.

In these aspects (inventions), by configuring and introducing an IP telephone system as a total system including the firewall, a whole system which is highly consistent and excels in reliability can be implemented at a reasonable cost.

A nineteenth invention of the present application provides an IP telephone system comprising the tunnel device according to any of the first, second, thirteenth, or fourteenth invention, the relay device according to any of the third, seventh, or eleventh invention, and the terminal device according to any of the fifth, eighth, or tenth invention. The IP telephone system is characterized in that when a direct speech packet transmission path is to be set between terminals inside of different firewalls, a test packet is transmitted to the relay device beyond the firewall from a speech packet reception port of a source terminal, and the firewall associated with the source terminal is discriminated to be Full Cone NAT if a speech packet reaches from a counterpart terminal within a first predetermined time, in association with the respective control units of the tunnel device, relay device, and the terminal device.

A forty third invention of the present application, which is assumed from a viewpoint that the nineteenth invention is implemented in a method, provides a method of controlling an IP telephone system comprising the method of controlling a tunnel device according to any of the twenty fifth, twenty sixth, thirty seventh, or thirty eighth invention, the method of controlling a relay device according to any of the twenty seventh, thirty first, or thirty fifth invention, the method of controlling a terminal device according to any of the twenty ninth, thirty second, or thirty fourth invention. The method is characterized by transmitting a test packet to the relay device beyond the firewall from a speech packet reception port of a source terminal when a direct speech packet transmission path is to be set between terminals inside of different firewalls, and discriminating the firewall associated with the source terminal to be Full Cone NAT if a speech packet reaches from a counterpart terminal within a first predetermined time, in association with the respective control units of the tunnel device, relay device, and the terminal device.

A sixty seventh invention of the present application, which is assumed from a viewpoint that the nineteenth and forty third inventions are implemented in a computer program, provides a program for controlling an IP telephone system comprising, in combination, the program for controlling a tunnel device according to any of the forty ninth, fiftieth, sixty first, or sixty second invention, the program for controlling a relay device according to any of the fifty first, fifty fifth, or fifty ninth, and the program for controlling a terminal device according to any of the fifty third, fifty sixth, or fifty eighth invention. The program is characterized by transmitting a test packet to the relay device beyond the firewall from a speech packet reception port of a source terminal when a direct speech packet transmission path is to be set between terminals inside of different firewalls, and discriminating the firewall associated with the source terminal to be Full Cone NAT if a speech packet reaches from a counterpart terminal within a first predetermined time, in association with the respective control units of the tunnel device, relay device, and the terminal device.

A twentieth invention of the present application is characterized, in the IP telephone system according to the nineteenth invention, in that when no packet has reached from the counterpart terminal in the first predetermined time, an attempt is made to transmit a hole punching packet from the reception port of the source terminal to a port different from a port of WAN side identification information of a transmission port of the counterpart terminal, and the firewall associated with the source terminal is discriminated to be Restricted Cone NAT if a speech packet eventually reaches in a second predetermined time from the counterpart terminal, in association with the respective control units of the tunnel device, relay device, and the terminal device.

A forty fourth invention of the present application, which is assumed from a viewpoint that the twentieth invention is implemented in a method, is characterized in the method of controlling an IP telephone system according to the forty third invention, by attempting to transmit a hole punching packet from the reception port of the source terminal to a port different from a port of WAN side identification information of a transmission port of the counterpart terminal when no packet has reached from the counterpart terminal in the first predetermined time, and discriminating the firewall associated with the source terminal to be Restricted Cone NAT if a speech packet eventually reaches in a second predetermined time from the counterpart terminal, in association with the respective control units of the tunnel device, relay device, and the terminal device.

A sixty eighth invention of the present application, which is assumed from a view point that the twentieth and forty fourth inventions are implemented in a computer program, is characterized in the program for controlling an IP telephone system according to the sixty seventh invention, by attempting to transmit a hole punching packet from the reception port of the source terminal to a port different from a port of WAN side identification information of a transmission port of the counterpart terminal when no packet has reached from the counterpart terminal in the first predetermined time, and discriminating the firewall associated with the source terminal to be Restricted Cone NAT if a speech packet eventually reaches in a second predetermined time from the counterpart terminal, in association with the respective control units of the tunnel device, relay device, and terminal device.

A twenty first invention of the present application is characterized, in the IP telephone system according to the twentieth invention, in that when no speech packet reaches from the counterpart terminal in the second predetermined time, a hole punching packet is transmitted from the reception port of the source terminal to the port of the WAN side identification information of the transmission port of the counterpart terminal, and the firewall associated with the source terminal is discriminated to be Port-Restricted Cone NAT if a speech packet eventually reaches from the counterpart terminal in a third predetermined time, in association with the respective control units of the tunnel device, relay device, and terminal device, and the firewall associated with the source terminal is discriminated to be Symmetric NAT if no speech packet cannot received from the counterpart terminal in the third predetermined time even in this case.

A forty fifth invention of the present application, which is assumed from a viewpoint that the twenty first invention is implemented in a method, is characterized, in the method of controlling an IP telephone system according to the forty fourth invention, by transmitting a hole punching packet from the reception port of the source terminal to the port of the WAN side identification information of the transmission port of the counterpart terminal when no speech packet reaches from the counterpart terminal in the second predetermined time, and discriminating the firewall associated with the source terminal to be Port-Restricted Cone NAT if a speech packet eventually reaches from the counterpart terminal in a third predetermined time, in association with the respective control units of the tunnel device, relay device, and the terminal device, and discriminating the firewall associated with the source terminal to be Symmetric NAT if no speech packet cannot received from the counterpart terminal in the third predetermined time even in this case.

A sixty ninth invention of the present application, which is assumed from a viewpoint that the twenty first and forty fifth inventions are implemented in a computer program, is characterized, in the program for controlling an IP telephone system according to the sixty eighth invention, by transmitting a hole punching packet from the reception port of the source terminal to the port of the WAN side identification information of the transmission port of the counterpart terminal when no speech packet reaches from the counterpart terminal in the second predetermined time, and discriminating the firewall associated with the source terminal to be Port-Restricted Cone NAT if a speech packet eventually reaches from the counterpart terminal in a third predetermined time, in association with the respective control units of the tunnel device, relay device, and terminal device, and discriminating the firewall associated with the source terminal to be Symmetric NAT if no speech packet cannot received from the counterpart terminal in the third predetermined time even in this case.

A twenty second invention of the present application provides an IP telephone system comprising the tunnel device according to any of the first, second, thirteenth, or fourteenth invention, and the relay device according to any of the third, seventh, or eleventh invention. The IP telephone system is characterized in that, in association with the respective control units of the tunnel device and relay device, a hole punching packet is transmitted from a particular port of a tunnel device installed inside of a firewall to be discriminated to a certain destination port of a relay device installed outside of the firewall to be discriminated for performing hole punching using a reference firewall which is Full Cone NAT, Restricted Cone NAT, or Port-Restricted Cone NAT, the relay device conveys WAN side identification information of the firewall to be discriminated of the particular port to a reference tunnel device installed inside of the reference firewall, and the firewall to be discriminated is discriminated to be Full Cone NAT if a packet sent from the reference tunnel device reaches the particular port.

A forty sixth invention of the present application, which is assumed from a viewpoint that the twenty second invention is implemented in a method, provides a method of controlling an IP telephone system comprising the method of controlling tunnel device according to any of the twenty fifth, twenty sixth, thirty seventh, or thirty eighth invention, and the method of controlling a relay device according to any of the twenty seventh, thirty first, or thirty fifth invention. The method is characterized by, in association with the respective control units of the tunnel device, and relay device transmitting a hole punching packet from a particular port of a tunnel device installed inside of a firewall to be discriminated to a certain destination port of a relay device installed outside of the firewall to be discriminated for performing hole punching using a reference firewall which is Full Cone NAT, Restricted Cone NAT, or Port-Restricted Cone NAT, conveying WAN side identification information of the firewall to be discriminated of the particular port from the relay device to a reference tunnel device installed inside of the reference firewall, and discriminating the firewall to be discriminated to be Full Cone NAT if a packet sent from the reference tunnel device reaches the particular port.

A seventieth invention of the present application, which is assumed from a viewpoint that the twenty second and forty sixth inventions are implemented in a computer program, provides a program for controlling an IP telephone system comprising, the program for controlling tunnel device according to any of the forty ninth, fiftieth, sixty first, or sixty second invention, and the program for controlling a relay device according to any of the fifty first, fifty fifth, or fifty ninth invention, in combination. The program is characterized by, in association with the respective control units of the tunnel device and relay device transmitting a hole punching packet from a particular port of a tunnel device installed inside of a firewall to be discriminated to a certain destination port of a relay device installed outside of the firewall to be discriminated for performing hole punching using a reference firewall which is Full Cone NAT, Restricted Cone NAT, or Port-Restricted Cone NAT, conveying WAN side identification information of the firewall to be discriminated of the particular port from the relay device to a reference tunnel device installed inside of the reference firewall, and discriminating the firewall to be discriminated to be Full Cone NAT if a packet sent from the reference tunnel device reaches the particular port.

A twenty third invention of the present application is characterized, in the IP telephone system according to the twenty second invention, in that when no packet has reached from the reference tunnel device to the particular port, the firewall tobe discriminated is discriminated to be Restricted Cone NAT if a packet sent from a port different from the destination port of the relay device reaches the particular port.

A forty seventh invention of the present application, which is assumed from a viewpoint that the twenty third invention is implemented in a method, is characterized, in the method of controlling an IP telephone system according to the forty sixth invention, by discriminating the firewall to be discriminated to be Restricted Cone NAT if a packet sent from a port different from the destination port of the relay device reaches the particular port when no packet has reached from the reference tunnel device to the particular port.

A seventy first invention of the present application, which is assumed from a viewpoint that the twenty third and forty seventh inventions are implemented in a computer program, is characterized, in the program for controlling an IP telephone system according to the seventieth invention, by discriminating the firewall to be discriminated to be Restricted Cone NAT if a packet sent from a port different from the destination port of the relay device reaches the particular port when no packet has reached from the reference tunnel device to the particular port.

A twenty fourth invention of the present application is characterized, in the IP telephone system according to the twenty third invention, in that when no packet has reached from the different port to the particular port, a packet is sent from a reference port selected by the reference tunnel device to the relay device to convey WAN side identification information of the reference port from the relay device to the tunnel device, a hole punching packet is transmitted from the same reference port of the reference tunnel device to the particular port to permit a packet from the particular port to pass through the reference firewall, and the firewall to be discriminated is discriminated to be Port-Restricted Cone NAT if a packet transmitted by the tunnel device from a particular port reaches the reference port, and is discriminated to be Symmetric NAT if the packet does not reach.

A forty eighth invention of the present application, which is assumed from a viewpoint that the twenty fourth invention is implemented in a method, is characterized, in the method of controlling an IP telephone system according to the forty seventh invention, by sending a packet from a reference port selected by the reference tunnel device to the relay device to convey WAN side identification information of the reference port from the relay device to the tunnel device when no packet has reached from the different port to the particular port, transmitting a hole punching packet from the same reference port of the reference tunnel device to the particular port to permit a packet from the particular port to pass through the reference firewall, and discriminating the firewall to be discriminated to be Port-Restricted Cone NAT if a packet transmitted by the tunnel device from a particular port reaches the reference port, and is discriminated to be Symmetric NAT if the packet does not reach.

A seventy second invention of the present application, which is assumed from a viewpoint that the twenty fourth and forty eighth inventions are implemented in a computer program, is characterized, in the telephone system according to the seventy first invention, by sending a packet from a reference port selected by the reference tunnel device to the relay device to convey WAN side identification information of the reference port from the relay device to the tunnel device when no packet has reached from the different port to the particular port, transmitting a hole punching packet from the same reference port of the reference tunnel device to the particular port to permit a packet from the particular port to pass through the reference firewall, and discriminating the firewall to be discriminated to be Port-Restricted Cone NAT if a packet transmitted by the tunnel device from a particular port reaches the reference port, and is discriminated to be Symmetric NAT if the packet does not reach.

In these aspects (inventions), the type of a firewall can be readily, rapidly, precisely and automatically discriminated by a simple approach, so that the IP telephone technology of the present invention can be introduced, operated, and managed with minimal optimal settings and processing even without special knowledge, complicated manuals or manipulations. In addition, the discrimination of the NAT type, which is the basis of the NAT traversal problem, can be unitized in the introduction, settings, and designing of other systems and applications as well.

A seventy third invention of the present application is
characterized, in the program for controlling a terminal device according to any of the fifty third, fifty sixth, or fifty eighth invention, by transmitting and receiving multimedia data including one or more of URL, character strings of a chat, moving image data, a mail address, a variety of telephone numbers, information on the position of a mobile terminal, and data on a channel or a program of television broadcasting, in place of a speech or together with a speech in a call with another terminal.

A seventy fourth invention of the present application is characterized, in the program for controlling a conference device according to the sixty fourth invention by providing or mediating multimedia data including one or more of URL, character strings of a chat, moving image data, a mail address, a variety of telephone numbers, information on the position of a mobile terminal, and data on a channel or a program of television broadcasting, in place of a speech or together with a speech in a call between terminals or with a terminal.

A seventy fifth invention of the present application, in which the seventy third and seventy fourth inventions are assumed as a method of controlling an overall system, is characterized, in the method of controlling an IP telephone system according to any of the thirtieth, thirty third, thirty sixth, forth first, or forty second invention, in that a terminal transmits and receives multimedia data including one or more of URL, character strings of a chat, moving image data, a mail address, a variety of telephone numbers, information on the position of a mobile terminal, and data on a channel or a program of television broadcasting, in place of a speech or together with a speech.

In these aspects (inventions),by transmitting multimedia data such as URLs, character strings of chat, moving image data and the like instead of speech or together with speech in a call or a conference through terminals, communications can be made in an optimal form in accordance with the situation with high power of expression to promote information sharing and mutual understanding.

As described above, the present invention can provide the IP telephone technology for transmitting speech packet by way of a tunnel even with Symmetric NAT. The other objects, features, and advantages of the present invention will be apparent from the following description of embodiments of the present invention.

### BRIEF DESCRIPTION OF THE DRAWINGS

[Fig. 1]
   A functional block diagram showing the configuration of an embodiment of the present invention.
[Fig. 2]
   A diagram showing a speech packet transmission via a tunnel in the embodiment of the present invention.
[Fig. 3]
   A diagram showing direct paths in a LAN in the embodiment of the present invention.
[Fig. 4]
   A diagram showing direct paths between LANs in the embodiment of the present invention.
[Fig. 5]
   A diagram showing an alternative bypass path for those which are not passed due to the Symmetric NAT within the direct paths between LANs in the embodiment of the present invention.
[Fig. 6]
   A diagram showing an exemplary processing procedure in the embodiment of the present invention.
[Fig. 7]
   A diagram showing direct paths in a LAN when an SIP (5060) proxy is additionally used in the embodiment of the present invention.
[Fig. 8]
   A diagram showing direct paths between LANs when the SIP (5060) proxy is additionally used in the embodiment of the present invention.
[Fig. 9]
   A diagram showing an alternative bypass path for those which are not passed due to the Symmetric NAT when the SIP (5060) proxy is additionally used in the embodiment of the present invention.
[Fig. 10]
   A flow chart showing a processing procedure for discriminating the FW type by use of an IP telephone function in the embodiment of the present invention.
[Fig. 11]
   A flow chart showing a processing procedure for discriminating the FW type by use of a reference FW in the embodiment of the present invention.
[Fig. 12]
   A diagram showing an exemplary conventional IP telephone.

### BEST MODE FOR CARRYING OUT THE INVENTION

Next, the most preferred embodiment for carrying out the invention will be described with reference to the drawings. However, repeated descriptions will not be made on premised matters which have been described in PRIOR ART and PROBLEM and are common to the present invention.

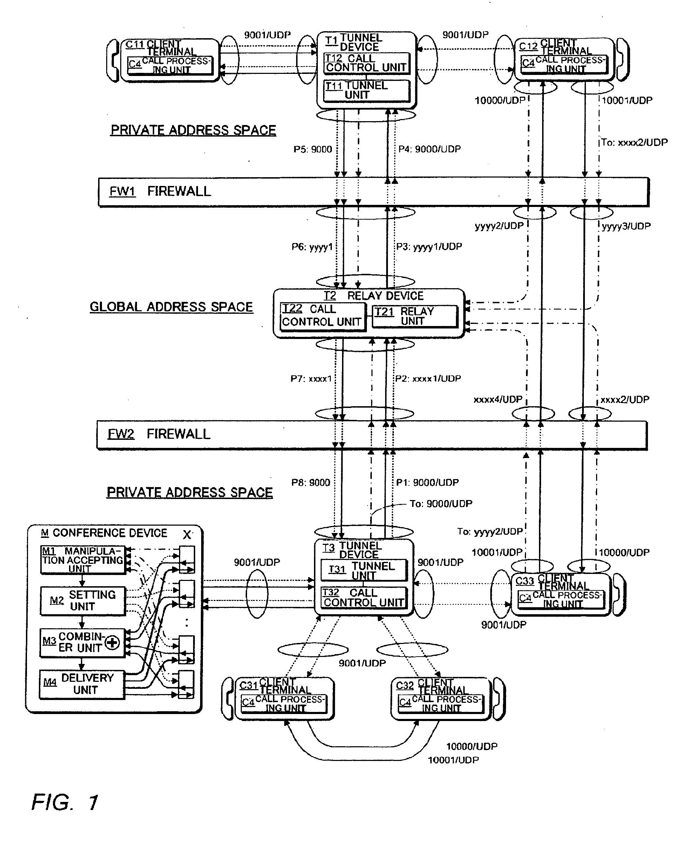

### [1. Configuration of First Embodiment] ... Fig. 1

As illustrated in a configuration diagram of Fig. 1, a first embodiment relates to an IP telephone system which comprises tunnel devices T1, T3, a relay device T2, and client terminals for IP call (terminal devices, and also called "client terminals" or "terminals") C (C11, C12, C31, C32, C33), and can be regarded as an individual device, a call control system which comprises a tunnel device and a relay device, and an IP telephone system which comprises a tunnel device or a call control system and terminal devices, or methods, programs, program systems and the like which correspond to any of them.

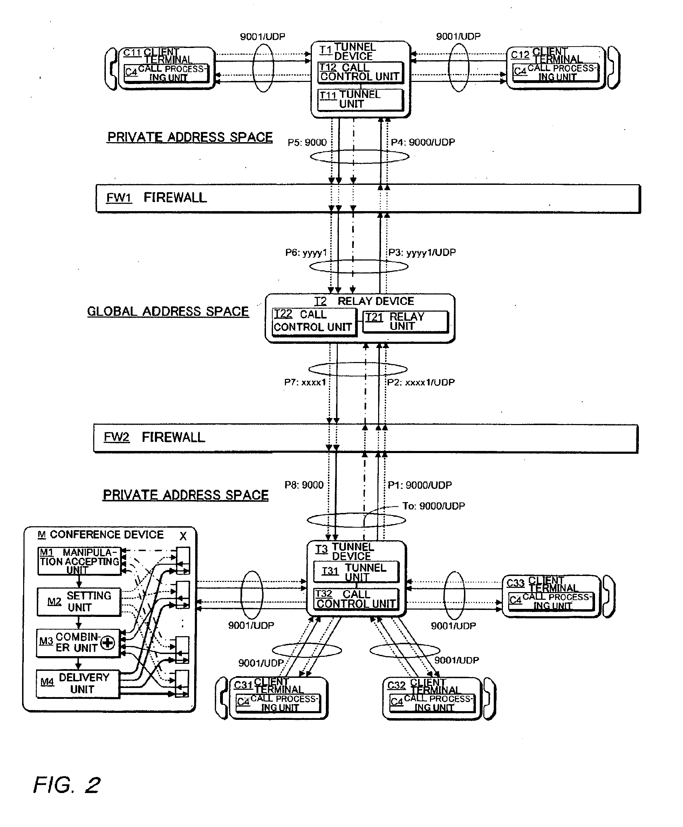

While Fig. 1 collects variety of configurations, controls, flows of speech packets, and the like on a single sheet for purposes of describing the configurations, actual actions will be described basically from the simplest one in order with reference to Fig. 2 onward. In each figure, arrows include broken line arrows which indicate flows of call control information, solid lines which means flows of speech packets, and one-dot chain lines which mean flow of remaining data, for example, a packet for UDP hole punching, and the like, including those for maintaining tunnel paths, except for the inside of a conference device M.

Also, the example of Fig. 1 is an example in which three or more conference devices M are incorporated among a plurality of terminals for mediating calls, arrows within the conference device M have meanings different from the aforementioned, where a broken line indicates control, a one-dot chain line indicates acceptance of a manipulation, a thin solid line indicates an uplink speech, and a bold solid line indicates a downlink speech in a relationship with a connection X with each terminal represented by a rectangle on a right side within the conference device M.

In this connection, each device comprises a unit for' connection with a communication network (for example, a wired or wireless network board, network card, or the like), and a control unit (for example, a CPU and associated peripheral circuits) for controlling communications through the connection unit, though not shown, as common components.

### [1-1. Tunnel Device]

Among others, tunnel devices T (T1, T3) are installed inside of firewalls FW1, FW2 (hereinafter simply represented by reference numerals) (on LAN side), respectively, for making FW traversal communications based on tunneling. Since the tunnel devices T1 and T3 are common in configuration, the tunnel T1 will be described.

Specifically, the tunnel device T1 implements functions of a tunnel unit T11 and a call control unit T12 in the form of program, in addition to the provision of the connection unit and control unit. Out of these units, the tunnel unit T11 is tunnel means for mediating communications with other tunnel devices installed in other FWs through a predetermined relay device T2 installed outside of FW1 (on the WAN side) by the connection unit and control unit. The call control unit T12 in turn is call control means for processing call control for calls placed by terminals C11 and C12 for IP calls, located in FW1, by the connection unit and control unit.

It should be noted that Fig. 1 appears to show a one-to-one communication between a LAN which includes the tunnel T1 in FW1 and a LAN which includes the tunnel T3 in FW2, but is a conceptual example for simplified illustration, so that actually, a star configuration may be built by providing third and subsequent FWs and tunnel devices centered on the relay device T2.

### [1-2. Relay Device]

The relay device T2 in turn is installed outside of the FW for relaying FW traversal communications based on tunneling, and implements functions of a relay unit T21 and a call control unit T22 in the form of program in addition to the provision of the connection unit and control unit. Out of these units , the relay unit T21 is relay means for mediating communications between the predetermined tunnel devices T1, T3 installed in the respective FWs by the connection unit and control unit. A data transmission path based on tunneling implemented between the tunnel devices T1 and T3 by way of the relay device T2 is simply called a "tunnel" in some cases. The call control unit T22 in turn is call control means for processing call control for a call placed by a terminal C for IP call located in each FW.

It should be noted that in the present application, it is at one's discretion whether to employ a call control sequence conforming to SIP. Also, for employing a server conforming to SIP, for example, it can be freely determined as to whether functions of such a server are integrally installed in the call control unit T22, whether they are collectively installed in any tunnel device, whether they are distributively installed in a plurality of tunnel devices, and whether they are distributively installed in tunnel devices and relay devices, as well as whether they are installed in a single hardware unit or installed in a plurality of different hosts in a distributed manner, as is the case with a proxy server function, a redirect server function, a registration server function, and the like in an SIP server. Accordingly, details on other devices and the like associated with them are omitted in the present application, and the most simple example shown herein is an example in which the call control unit T22 of the relay device T2 is responsible for a call control server function. The installation may be such that communications of conventional SIP (port number 5060) are made with a particular port number (for example, 9001) by way of the tunnel devices T1 and T3.

### [1-3. Terminal Device]

The terminal C (C11, C12, C31, C32, C33) in turn is a terminal device for IP call which is installed in each FW for placing FW traversal calls. Though not shown, the terminal C comprises manipulation means such as dial buttons, a hook button and the like, call transmitting means such as a microphone and the like, and call receiving means such as a speaker and the like, in addition to the connection unit and control unit. Then, each terminal C implements functions of a call processing unit C4 in the form of program, where the call processing unit C4 is call processing means for conducting control and processing for calls based on the IP telephone, including communications by way of the connection unit as well as encoding and decoding of speech.

### [1-4. Conference Device]

A conference device M in turn comprises the connection unit and control unit, where the control unit implements respective functions of a manipulation accepting unit M1, a setting unit M2, a combiner unit M3, and a delivery unit M4. Among these units, the manipulation accepting unit M1 is manipulation accepting means for accepting manipulations from each terminal; the setting unit M2 is a setting means for setting a speech packet transmission path with each terminal; the combiner unit M3 is combining means for combining speeches from respective terminals for conference; and the delivery unit M4 is delivering means for delivering a combined speech to each terminal. It should be noted that the conference device M may basically behave has one type of terminal in a relationship with the tunnel device T3, and that while only one is shown in FW2 in the drawings, any number of conference devices may be installed anywhere.

### [2. Actions and Effects of First Embodiment]

### [2-1. Basic Actions] ... Fig. 2

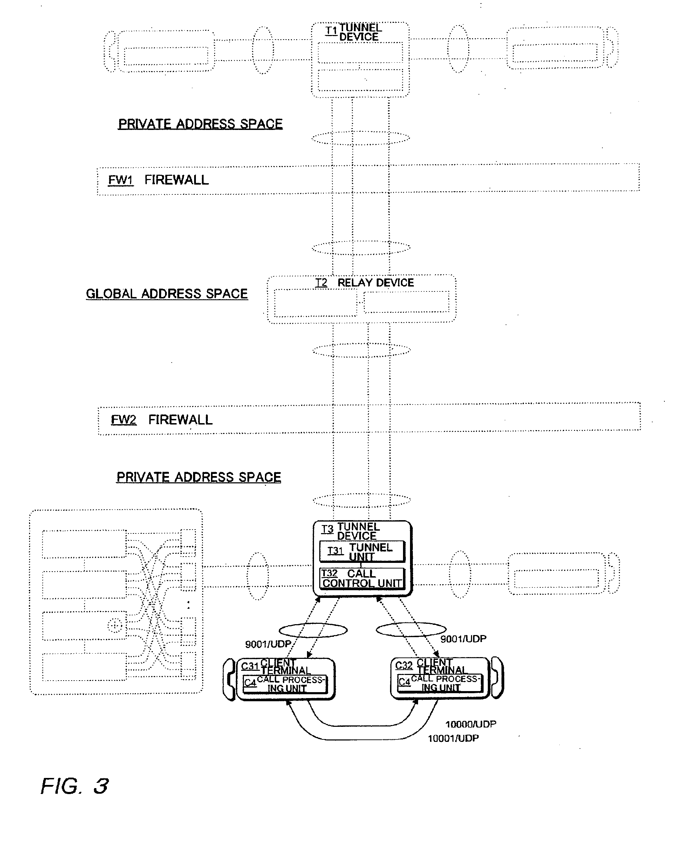

The most basic minimal action of this system is to establish a call between different LANs through a tunnel even with Symmetric NAT. In Fig. 2 onward, particularly notable portions will be shown for purposes of description of actions among elements such as the configuration, control, data flows, and the like shown in Fig. 1. Particularly, in Fig. 3 onward, other portions are simply indicated by broken lines, but this does not mean that such other portions do not exist or are not required in particular.

### [2-1-1. Processing in Tunnel Device]

In an example of Fig. 2, the call control units T12, T32 of the tunnel devices T1, T3 work as means for performing the following respective processing in accordance with predetermined protocols particular to the present invention and port numbers (9001 for the terminals C, and 9000 for the relay device T2). While the tunnel device T3 is given as an example herein, the same applies to the tunnel device T1.

Specifically, the call control unit T32 of the tunnel device T3 works in the following manner, in the first place, in a call with a terminal (for example, C11) in a different FW (for example, FW1).
(1) Specifically, the call control unit T32 accepts a call placing request from a terminal C31, C32 or C33 in the same FW2 as the tunnel device T3 to the terminal C11 in another FW (for example, FW1), and mediates the request to the outside of FW2 by way of the tunnel unit T31.
(2) Also, the call control unit T32 receives a call receiving request from the outside of FW2 to the interior by way of the tunnel unit T31, and mediates the request to the destination terminal C31, C32 or C33.
(3) Then, the call control unit T32 mediates the transmission of speech packets by way of the tunnel unit 31 in a call from the outside of FW2 to a terminal.

Additionally, the call control unit T32 of the tunnel device T3 mediates transmissions of both call placing/receiving requests and speech packets in a call between terminals (for example, C32 and C33) in the same FW2.

### [2-1-2. Processing in Relay Device]

The call control unit T22 of the relay device T2 in turn works at least as means for relaying call placing/receiving requests and speech packets for a call for each tunnel device T1, T3 corresponding to each terminal, using the relay unit 21 in a call between terminals (for example, the terminal C11 in FW1 and the terminal C32 in FW2) in different FWs.

### [2-1-3. Processing in Terminal]

The call processing unit C4 of each terminal C (here, the terminal C32 in FW2 is given as an example) in turn works as means for performing the following respective processing in accordance with the aforementioned protocol and port number 9001 used by the tunnel devices T1, T3 by the control unit associated therewith:
(1) The call processing unit C4 accepts at least manipulations of a call placement, a call reception response, a call termination from the manipulating means such as dial buttons, hook button and the like, not shown.
(2) The call processing unit C4 transmits and receive call control information including a call placing/receiving request to and from a predetermined tunnel device T3 installed in the same FW2 in accordance with a predetermined protocol and port number (9001) by the connection unit for a call between another terminal (for example, the terminal C31) in the same FW2 and another terminal (for example, C11) in a different FW1.
(3) The call processing unit C4 transmits and receives speech packets associated with a transmission to and from the tunnel device T3 in accordance with the protocol in a call with the terminal C11 in the other EW1.
(4) The call processing unit C4 performs processing associated with the encoding and decoding during a call.

### [2-1-4. Example of Port Number]

The relationship among ports used in the basic actions as described above will be summarized with reference to communications P1 - P8. In this example, the tunnel device uses 9000/UDP with the FW, and 9001/UDP with the terminal C (including the conference device M).

In a specific example of this scenario, assuming that, among information such as call control information, speech packets and the like, a direction from the tunnel device T3 to T1 is an uplink direction, an uplink path involves communications P1 -> P2 -> P3 -> P4, whereas assuming that is a downlink direction, a downlink path involves communications P5 -> P6 -> P7 -> P8. In this event, even if the tunnel device T3 uses a predetermined port number toward FW2, for example, 9000/UDP in the uplink communication P1 to the relay device T2, the communication P1 is converted, for example, to an appropriate port number xxxx1 by FW2 as the uplink communication P2 to the relay device T2 which is operating on the WAN side outside of FW2.

This WAN side port number xxxx1 is maintained as the destination of the communication P7 from the relay device T2 in the opposite direction by periodically transmitting a hole punching packet indicated by a one-dot chain line from a #9000 port of the tunnel device T3 to the relay device T2 through FW2, and storing the transmission in FW2, and a communication to this same WAN side port xxxx1 is forwarded to the #9000 port on the LAN side by FW2 in the same correspondence relationship, whereby a tunneling path which passes the downlink communications P7, P8 as well in addition to the uplink communications P1, P2 between the #9000 port of the tunnel device T3 and the port xxxx1 of the relay device T2.

Likewise, a tunneling path is maintained between a #9000 port of the tunnel device T1 on the opposite side and a port yyyy1 of the relay device T2, and is used in the communications P3, P4 in the uplink direction and the communications P5, P6 in the downlink direction.

### [2-1-4. Effects of Basic Actions]

As shown in Fig. 2 and described above, for a call between terminals in different FW1, FW2, the tunnel devices T1, T3 in respective FW1, FW2 mutually perform the call control and speech packet transmission by way of the relay device T2 outside of FW1, FW2 , thereby enabling a call through a transmission of speech packets and the like between the terminals even if any one or both of FWs are Symmetric NATs. In this event, since all speech packets such as RTP and the like pass through the tunnel devices T1 and T3 and the relay device T2, the number of simultaneous connections is defined from the capabilities of these respective devices T1, T3, T2 and the bit rate of the speech packet.

Also, in the example of Fig. 2, each of FW1, FW2 sets a transmission of UDP/9000 from the inside to the outside to be allowed at least for the relay device T2. Also, for correctly sending UDP packets from the relay device T2 to the tunnel devices T1, T3, FW1, FW2 must support the hole punching for UPD/9000 from the inside.

### [2-2. Conference] ... Fig. 2

The conference device M in turn behaves as one terminal in an IP call in a relationship with the tunnel device (for example, T3) and relay device T2, and receives a termination from other terminals or requests other terminals to participate in a conference in accordance with a protocol and port number conforming to normal call origination and reception in the IP telephone.

Then, communications particular to the conference, for example, destination of participants and a request for start from a terminal of a convocator, a notification of a request for participation in a call transmission from the conference device M to specified participants, and the like may be communicated with each terminal in accordance with a previously determined protocol together with call control messages in call origination and reception as the IP telephone as a different message from a call control message, though related to a call control sequence, particularly, using a different port number.

While details on such communications may be freely determined, the conference device M essentially performs processing as follows when it mediates a connection of a call among three or more parties in a plurality of terminals.
(1) First, the manipulation accepting unit M1 accepts at least manipulations associated with a designation of each participant and a request for start, a response to the request or a call reception response, and a call termination from terminals of participants including the convocator of a conference through the connection unit.

(2) The setting unit M2 sets a pair of speech packet transmission paths for an uplink speech collection and a downlink speech delivery by way of a tunnel device or directly by transmitting and receiving call control information through direct or indirect communications with a predetermined tunnel device installed in the same FW or a predetermined relay device installed outside of FW for each of terminals of other respective participants located in the same FW and different FWs through the connection unit.

For example, when each tunnel device T1, T3 has already known information on the existence, IP address and the like of each of terminals in the same FWs, it is good enough for the conference device M to directly transmit and receive call control information for setting a transmission path with the terminal C33 in the same FW2 to and from the tunnel device T3. For the terminal C11 in the different FW1, the call control information will have to be indirectly transmitted and received to and from the tunnel device T1 by way of the relay device T2.

(3) Then, the combiner unit M3 combines speech signals of the respective uplink speeches received from these other participants through addition for each combination of other participants except for one participant among those participants who have set a pair of transmission paths as mentioned above.
(4) In addition, the delivery unit M4 delivers the speech signal combined by the combiner M3 to the one terminal through the connection unit.
For example, when the terminals C31, C32, C33 are participants, a combination of uplink speeches of the terminals C31 and C32 is delivered to the terminal C33; a combination of speeches of C32 and C33 to the terminal C31; and a combination of C31 and C33 to C32. The call among three parties or more as described above further expands applicable ranges of the present invention.

### [2-3. Setting of Direct Path in LAN] ... Fig. 3

Also, when terminals which are to place a call with each other are connected to the same tunnel device, i.e., in the same FW or LAN, a speech packet transmission path of RTP and the like between both terminals my be set as a directly routed path (called the "direct path") instead of by way of the tunnel device, whereby a bottleneck can be eliminated in the tunnel device.

The determination that a source and a destination terminals are located in the same FW, i.e., the same LAN, and exchange of identification information between these terminals may be concluded at the tunnel device, or the information may be transferred to the relay device T2 to receive a determination according to the configuration of system. In any case, the tunnel device T3, for example, conveys this determination, for example, to the terminals C31 and C32 which are attempting to make such a call by determining at a stage of port negotiation in the call control sequence and transmitting and receiving speech packets such as RTP and the like through direct UDP communications.

In response, the call processing unit C4 of each terminal C31, C32 provides the counterpart terminal with identification information including a private IP address and a port number of a port which is intended for use by each terminal in transmitting the speech packets to each other directly or indirectly by way of the tunnel device T3 in the same FW in order to set a direct path between these terminals.

As a result, as shown in Fig. 3, in a call between the terminals C31 and C32 in the same FW2, for example, only the call control information (broken line) passes through the tunnel device T3, whereas the speech packets such as RTP and the like pass direct packet transmission paths (10000/UDP, 10001/UDP and the like) between the terminals C32 and C33.

In this way, the terminals which are attempting to make a call to each other in the same FW are allowed to transmit speech packets such as RTP and the like directly, rather than by way of a tunnel by transmitting their respective IP addresses and port numbers from the tunnel device, thereby advantageously making it possible to reduce load for the tunnel device in correspondence to cause less bottleneck and effectively avoid instable speech qualities such as interrupted speech and the like due to load concentration, and limitations in the number of simultaneous connections.

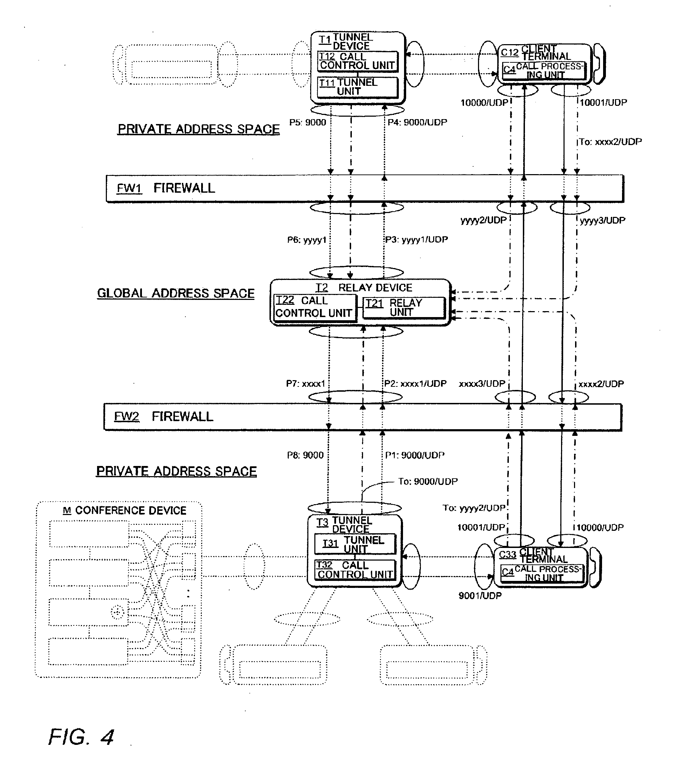

### [2-3. Setting of Direct Path between LANs] ... Fig. 4

Also, in a call between terminals attempting to make a call to each other, which are located in different FWs, i. e. , different LANs, by setting a speech transmission path such as RTP and the like between both terminals as a direct path, rather than by way of the tunnel devices T1, T3 and relay device T2, the bottleneck can be eliminated in the tunnel devices T1, T3 and relay device T2. Fig. 4 shows the terminal C12 in FW1 and the terminal C33 in FW2, given as an example.

In this event, the call control unit T22 of the relay device T2 determines that the terminals C12 and C33 which are attempting to make a call are located respectively in different FW1, FW2, and receives a test packet transmitted beyond the FW from each speech port (reception port and transmission port) which are intended for use by each terminal C12, C33 in the transmission of speech packets, in order to set a direct path between these terminals C12, C33, thereby acquiring WAN side identification information including an FW outside port number of those speech ports and mutually notifying the counterpart terminal using the relay unit T21.

In this event, the call processing unit C4 of each terminal C12, C33 determines a reception port and a transmission port (here, a reception port 10000 and a transmission port 10001) in the call control sequence with the tunnel devices T1, T3 in the same FW, in addition to acceptance of manipulations, and determination of a reception port and a transmission port in the event of encoding/decoding during a call and negotiation, and then performs the following works at two stage.

### [2-3-1. Transmission of Test Packet]

At a first stage, each terminal C12, C33 transmits a test packet from each speech port to a predetermined relay device T2 installed outside of the FW through the connection unit, thereby notifying the WAN side identification information on the own terminal side, including FW outside port numbers yyyy2, yyyy3, xxxx2, xxxx3 of respective speech ports. A port number of the relay device T2, to which the test packet is transmitted, may be the same number as 10000/UDP or the like, or alternatively, a predetermined port number such as 5080 of STUN may be previously determined as appropriate.

The purpose of the test packet transmission is to enable the relay device T2 beyond the FW to read an IP address and a port number included in a header of the test packet as a source as the WAN side identification information and notifies a counterpart terminal of the IP address and port number. Both terminals C12 and C33 transmit the test packets from both of the reception port and transmission port, such that the respective WAN side identification information is conveyed from the relay device T2 which has read the information to the counterpart. For example, the relay device T2 knows from a test packet from the reception port 10000 of the terminal C12 that the reception port has been corresponded to the port number yyyy2 and converted for the WAN side outside of the port FW1, and conveys to the terminal C33. For the other speech ports, the terminals C12 and C33 mutually obtain the WAN side identification information of the reception port and transmission port of the counterpart through similar processing. In the example of Fig. 4, two sets of the reception port and transmission port, opposing each other, of the terminals C12 and C33 are set in the following manner.

| | C12 | FW1 | FW2 | C33 | |
|---|---|---|---|---|---|
| Reception: | 10000 | yyyy2 <- xxxx3 | | 10001: | Transmission |
| Transmission: | 10001 | yyyy3 -> xxxx2 | | 10000: | Reception |

In this connection, the WAN side identification information which is made known to the relay device T2 through the test packet in the foregoing manner generally includes a WAN side IP address of each FW. Alternatively, when a WAN side IP address of FW in an Internet connection using a fixed global IP address in an organization such as an enterprise is fixed, the IP address may have been previously held in the relay device T2, in which case minimally required information which should be made known to the relay device T2 each time is an FW outside port number of each speech port.

In this connection, when the call control unit T22 of the relay device T2 notifies the counterpart terminals C11 and C33 of the WAN side identification information of each speech port of each terminal acquired as described above from the tunnel device T1 or T3, a port number 9001 is used in place of SIP (5060) . Here, the WAN side identification information generally has a form of:
"202.213.***.4:16789"
in a pair of the IP address and port number, when FW1 is supposed to have a WAN side IP address "202.213.***.4" and a port number yyyy2 "16789", but this information is represented by "FW1:yyyy2." Such WAN side identification information represents a port outside of FW (surface).

### [2-3-2. Transmission of Hole Punching Packet]

In a second stage of the works performed by the call processing unit C4 of each terminal C12, C33, the call processing unit C4 transmits a hole punching packet from the reception port thereof to an FW outside port of a counterpart transmission port from among mutually received WAN side identification information of the counterpart, and causes the FW to record the relationship between the source and destination, thereby setting a direct path such that speech packets such as RTP and the like from the transmission port of the counterpart to the reception port of the terminal can passes through the FW. The hole punching is repeated every several seconds to several hundreds of seconds in accordance with a setting in order to maintain the direct path during a call.

For example, once a hole punching packet is transmitted from a reception port 10000 of the terminal C12 to "FW2 :xxxx3" which is a transmission port of the terminal C33 on the surface of FW2 as viewed from the terminal C12, data can be subsequently transmitted in the opposite direction between these ports for a predetermined period of time. Specifically, when an RTP packet is transmitted from a transmission port 1001 of the terminal C33 to "FW1:yyyy2," this is a transmission from the aforementioned "FW2:xxxx3" to "FW1 :yyyy2 when viewed from FW1, so that the RTP packet is forwarded to "Terminal C12:10000" which is a private address.

Communications in the opposite direction are similar in that once a hole punching packet is transmitted from the reception port 10000 of the terminal C33 to an FW1 surface port "FW1:yyyy3" of the transmission port in the terminal C12, transmissions from the transmission port "FW1:yyyy3" of the terminal C12 to "FW2:xxxx2" in the opposite direction is forwarded by FW2 to "Terminal C33 :10000".

In this way, a burden on the tunnel can be reduced by passing as many speech packets as possible through a direct transmission path in FW traversal calls other than Symmetric NAT. Specifically, as each of terminals which are attempting to make a call between different FWs transmits a packet to a relay device beyond the FW, the relay device confirms the FW outside port numbers of the speech ports of the respective terminals and transmits them to their respective counterparts by way of a tunnel, and causes them to mutually transmit a hole punching packet to the port number of the counterpart and transmit speech packets such as RTP and the like directly, rather than by way of a tunnel, whereby the tunnel device and relay device are less likely to be a bottleneck on communications, thus advantageously making it possible to effectively avoid instable speech qualities such as interrupted speech and the like due to load concentration, and limitations in the number of simultaneous connections.

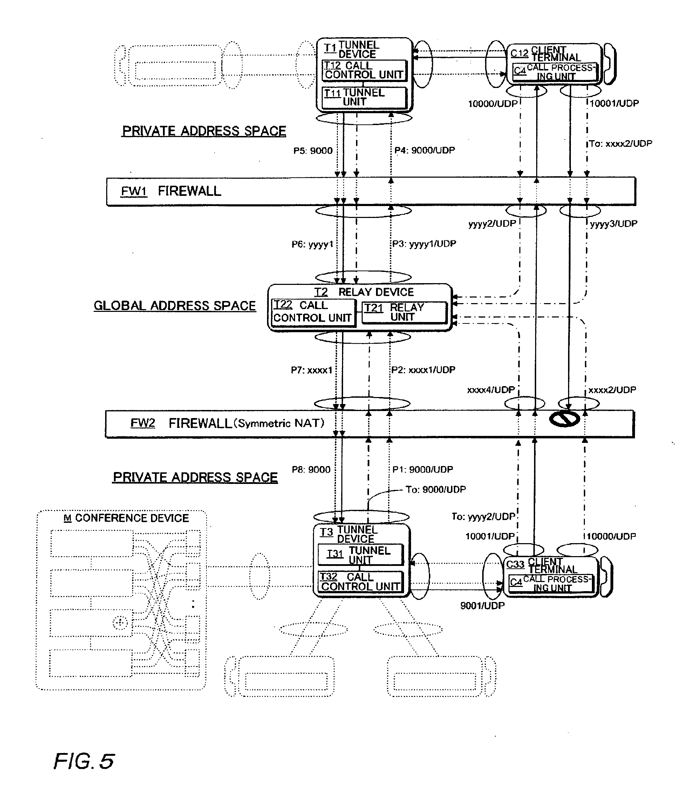

### [2-4. Circumvention upon Failure of Direct Path] ... Fig. 5

Since the direct path between LANs through the hole punching as described above suffers from a phenomenon that speech packets in a direction toward the FW does not reach (unidirectional speech) when any one of FWs is Symmetric NAT, an alternative bypass path is ensured for the speech packets by way of a tunnel (Fig. 5).

In this event, the call processing unit C4 of each terminal C which participate in a call notifies the relay device T2, when the control unit detects that speech packets have reached from the counterpart terminal or that they have not been reached within a predetermined waiting time, after the notification or receipt of the WAN side identification information, that the speech packets have reached or not reached, in accordance with the predetermined protocol and the port number 9001 by way of a corresponding tunnel device within the same FW.

Corresponding to this, the call control unit T22 of the relay device T2 sets an alternative bypass path by way of a tunnel device of a speech packet transmission path associated with the notification, using the relay unit T21, when it is notified not from any of the terminals which are attempting to make a call that the speech packets had reached within a predetermined waiting time or is notified that the speech packets have not reached.

In the foregoing, the example of notifying the relay device T2 of the arrival of speech packets from the terminal is an example in which the relay device T2 monitors the waiting time and determines time-out, whereas the example of notifying a failed arrival of speech packets in the waiting time is an example in which the terminal monitors the waiting time and determines time-out. In any case, when no speech packets reaches, for example, from the terminal C12 to C33, the call control unit T22 of the relay device T2 sets an alternative bypass path for the speech packets from the terminal C12 to C33 by way of the tunnel device T1 to the relay device T2 to the tunnel device T3.

In this way, even when a direct speech packet transmission path cannot be set due to Symmetric NAT or the like, a reliable call can be made irrespective of the type of NAT by setting an alternative bypass path by way of a tunnel device through a tunnel.

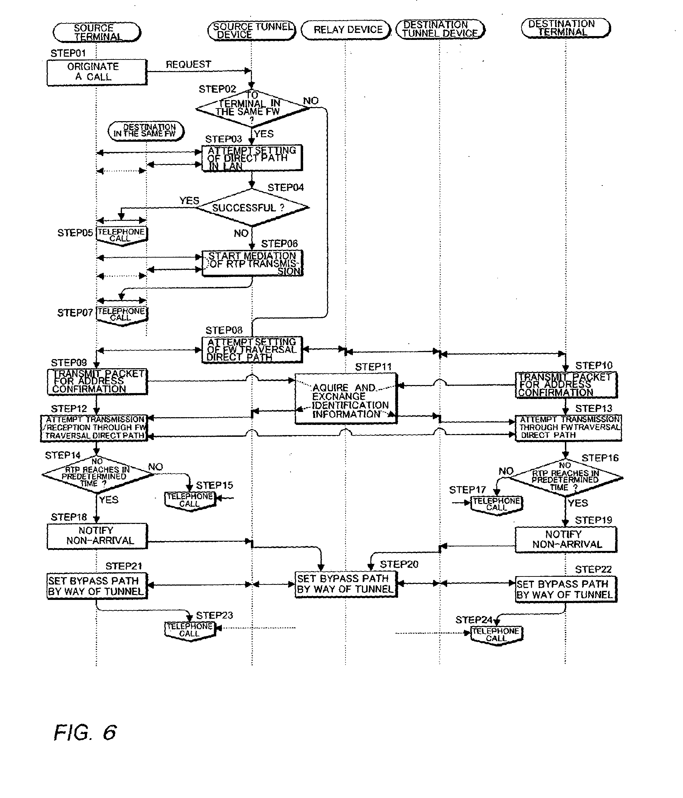

### [2-5. Exemplary Processing Procedure] ... Fig. 6

Based on the respective examples described above, a sequential order when an attempt is made to place a call between terminal involves attempting to set a direct path between terminals in the same LAN (Fig. 3), attempting to set direct paths for going and returning of speech, if possible, between terminals in different LANs (Fig. 4), setting an alternative bypass path in a direction in which speech packets do not reach in Symmetric NAT (Fig. 5), and transmitting speech packets entirely by way of a tunnel between terminals for which any direct path is not established for some cause (Fig. 2).

A general processing procedure in such an order is shown in a flow chart of Fig. 6. Specifically, in this procedure, when a request is made for call origination (placement of a call) from a source terminal (step 01), a tunnel device attempts to set an intra-LAN direct path between the tunnel device and a reception terminal within the same FW (step 03) when the call is directed to a destination in the same FW (step 02). The call is started (step 05) if successful (step 04), but the tunnel device starts the mediation of transmission (step 06) for speech packets such as RTP and the like when not successful (step 04) to make a call (step 07).

On the other hand, when the destination is not in the same FW (step 02), the tunnel device associated with the source terminal first attempts to set an FW traversal direct path between the tunnel device and the destination, i.e., counterpart terminal (step 08). In the setting of the FW traversal direct path, the relay device (step 11) actually transmits a test packet for confirming the address from each of the source terminal and destination terminal (steps 09, 10) to acquire WAN side identification information of the respective terminals and communicate them to the others (step 11).

On top of that, each terminal is forced to attempt transmission/reception on the FW traversal direct path using the hole punching (steps 12, 13). If a speech packet such as RTP or the like reaches from the counterpart within a predetermined time (steps 14, 15), a call can be started as it is (steps 15, 17). On the other hand, if such a packet does not reach (steps 14, 16), a relay device exchanges call control information with each terminal, based on a non-arrival notification from the terminal, to set an alternative bypass path for a pertinent speech packet transmission path by way of a tunnel (steps 20, 21, 22), followed by the start of a call (steps 23, 24).

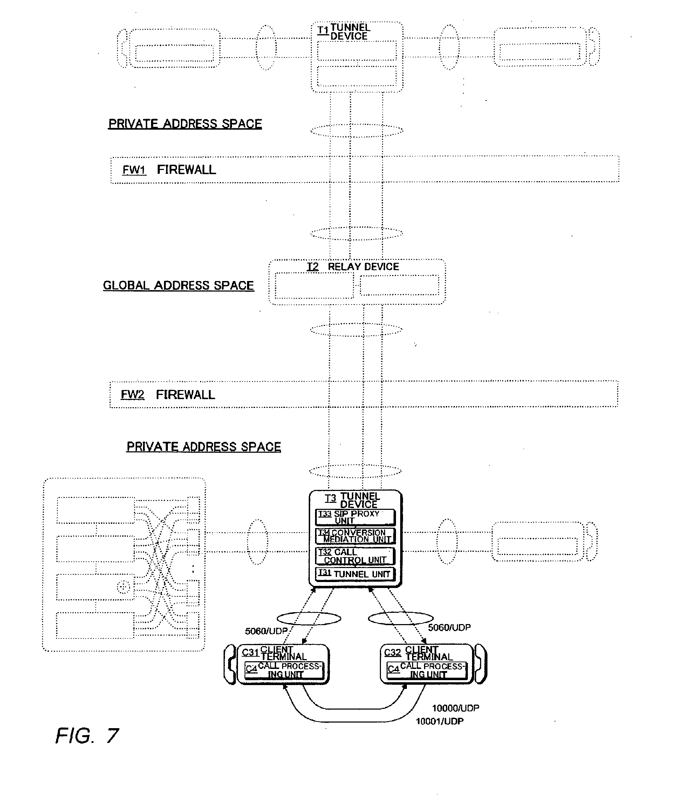

### [3. Second Embodiment] ... Figs. 7 - 9

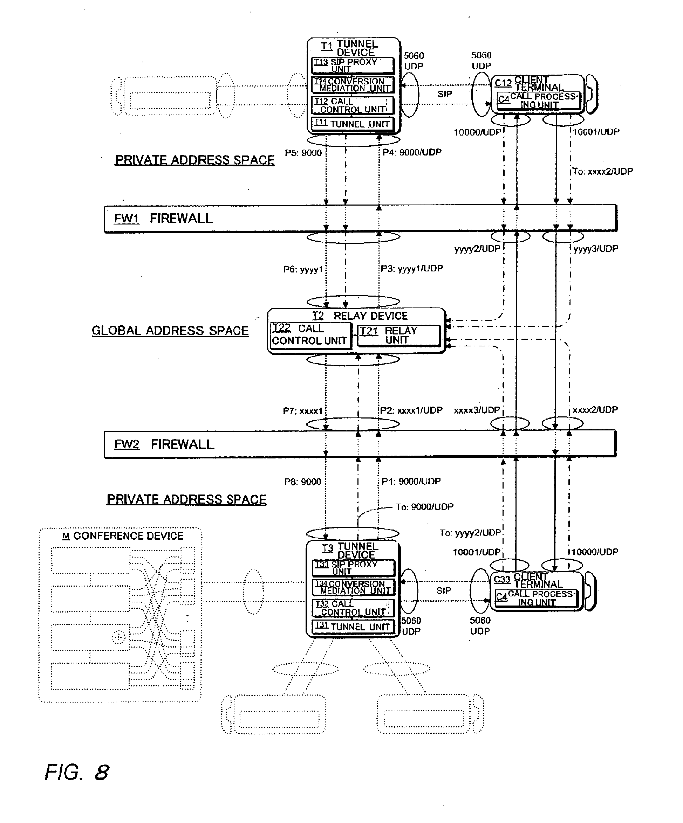

A second embodiment shows an example in which the conventional SIP is used in combination. In this event, the tunnel devices T1, T3, for example, implement functions of SIP proxy units T13, T33 (for example, Fig. 8) and conversion mediation units T14 T34 through the connection unit and control unit. Among these functions, the SIP proxy units T13, T33 are SIP proxy means for communicating with each terminal in FW using a predetermined second port number (for example, 5060) as a proxy server of SIP. The conversion mediation units T14, T34 in turn are mediating means for mediating communications of call control messages and the like (after they are converted as required) between terminals which utilizes a protocol and a port number (for example 9001) particular to the present invention (particularly, the first embodiment described above) and the SIP and the second port number 5060.

In this event, for example, in a manner similar to Fig. 3, call control information is transmitted and received between each terminal and a tunnel device by way of the SIP (5060) (Figs. 7, 8) either when a direct path is used between terminals in the same LAN (Fig. 7), or when a direct path is used between terminals in different LANs in a manner similar to Fig. 4 (Fig. 8). This is a conventional basic SIP/RTP procedure which permits conventional SIP terminals to be connected as well.

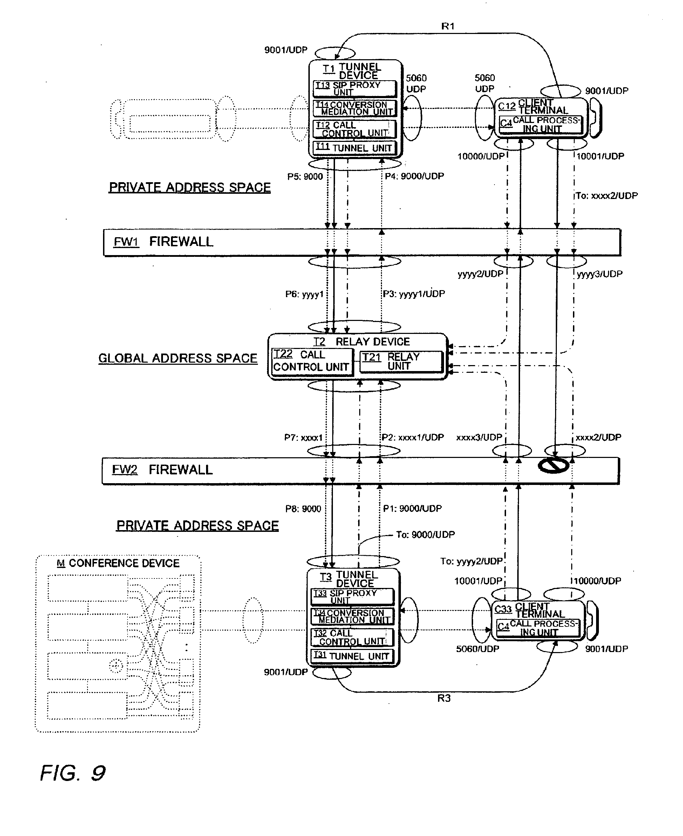

Also, when each terminal and tunnel device are connected through the SIP (5060) in this way, the call control units T12, T32 of the tunnel devices T1, T3 sets transmission paths R1, R3 between other ports such as 9001 through the call control using the SIP and the second port number 5060 between them and the terminals and utilize the transmission paths for delivering speech packets, when the tunnel devices T1, T3 mediate transmission/reception of speech packets by way of a bypass path through a tunnel due to the existence of Symmetric NAT to/from the terminals C12, C33 in the same FW, respectively, in a call with a counterpart terminal in a different FW (Fig. 9), in a manner similar to Fig. 5.

In this way, in the second embodiment, since speech packets can be transmitted/received to/from a terminal set for the SIP in accordance with the conventional SIP in the FW inside of the firewall in a communication conforming to the protocol in the present invention or by way of a tunnel, conventional settings and terminals for the SIP can be combined with and used with those of the present invention to enable mutual calls as well, thus further facilitating the introduction of the present invention.

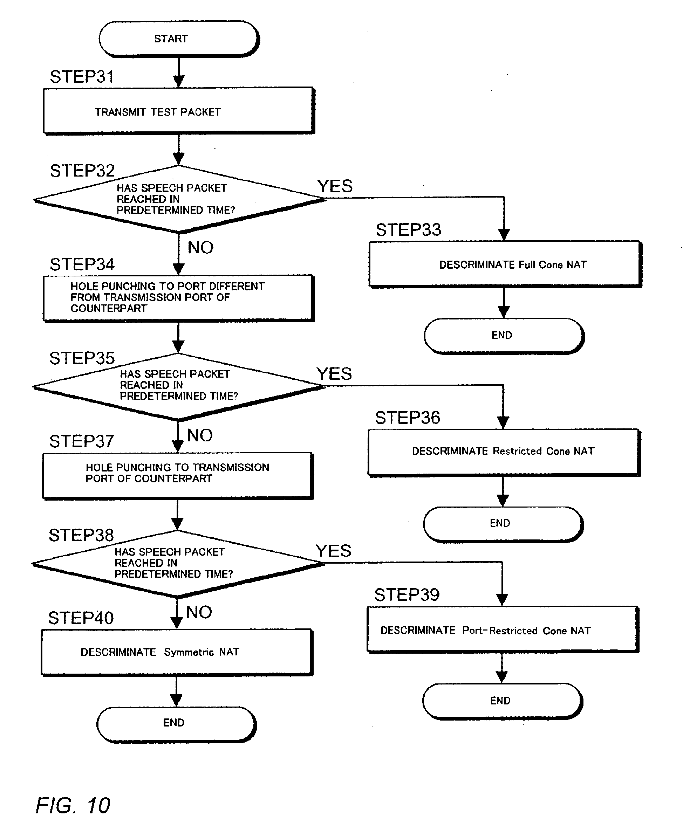

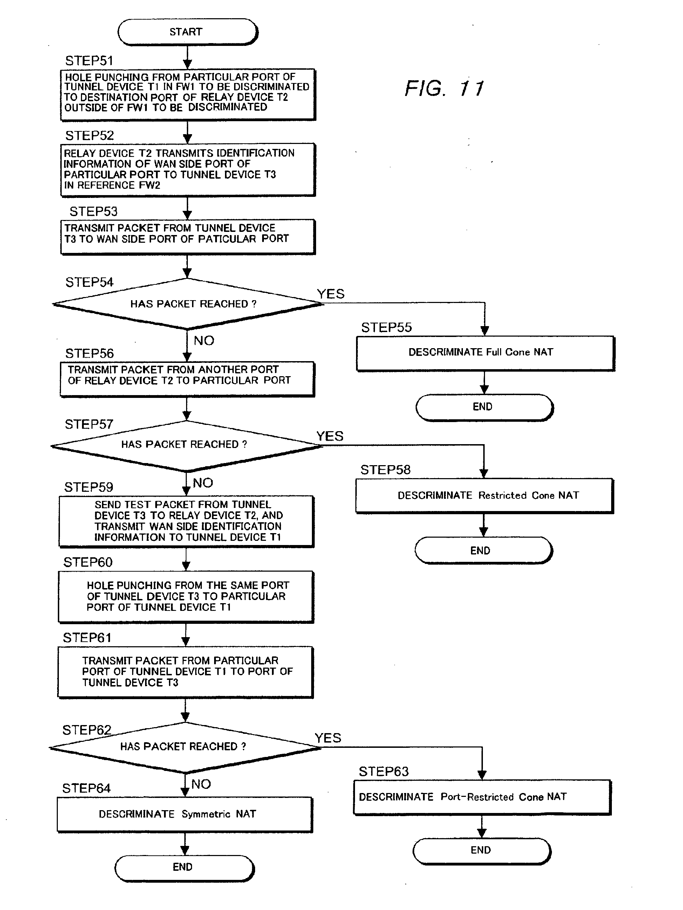

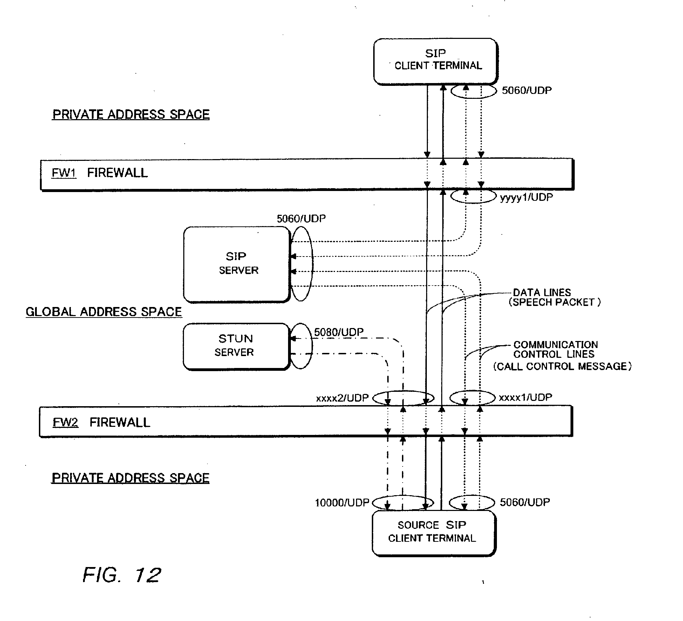

### [4. Third Embodiment] ... Figs. 10, 11

An application of each embodiment described above can discriminate the type of FW, utilizes it in automatic settings of the protocol including the hole punching, and also utilize it in settings, designing and the like of other systems and applications. The following two discrimination approaches are contemplated.

### [4-1. Discrimination by Actual Trial Operation] ... Fig. 10

First, the functions of each embodiment described above are utilized, the procedure of which is shown in Fig. 10. Specifically, when an attempt is made to set a direct path between terminals in different LANs (Fig. 4), a test packet is transmitted from a reception port of a source terminal beyond the FW to the relay device T2 (step 31), whereas the transmission of a hole punching packet is suspended. If a speech packet still reaches from the counterpart in a predetermined period of time (step 32), the FW associated with the source terminal can be discriminated to be Full Cone NAT (step 33) because the FW has passed data therethrough from FW of the counterpart which has a different IP address from the relay device T2 which has been the destination of the test packet.

When no packet has reached from the counterpart in the predetermined period of time (step 32), an attempt is made to transmit a hole punching packet from the reception port of the source terminal to a port different from a port of the WAN side identification information of the transmission port of the counterpart terminal (step 34). As a result, if a speech packet reaches from the counterpart terminal in the predetermined period of time (step 35), the FW associated with the source terminal can be discriminated to be Restricted Cone NAT (step 36) because the FW permits a difference in port number provided that a match is simply found in the destination of the hole punching packet and the IP address.

When no packet has reached from the counterpart in the predetermined period of time (step 35), a hole punching packet is transmitted from the reception port of the source terminal to a port of the WAN side identification information of the transmission port of the counterpart terminal (step 37). As a result, if a speech packet reaches from the counterpart terminal in a predetermined time (step 38), the FW associated with the source terminal can be discriminated to be Port-Restricted Cone NAT (step 39) because the FW permits packets to pass therethrough in the opposite direction on the condition that a match is found in all of the destination of the hole punching packet, IP address, and port number. Also, even in this event, if no speech packet has been received from the counterpart in a third predetermined period of time (step 38), the FW associated with the source terminal can be discriminated to be Symmetric NAT (step 40).

### [4-2. Unitization of Relay Device and Tunnel Device in Another FW] ... Fig. 11

A second approach uses FW2 for reference which has been previously found that its type is not Symmetric NAT, the procedure of which is shown in Fig. 11. In this example, FW1 shown in Fig. 4 and the like is to be discriminated, where FW2 is used for reference, supposing that FW2 is not at least Symmetric NAT but Full Cone NAT or Restricted Cone NAT or Port-Restricted Cone NAT.

Specifically, a hole punching packet is transmitted from a particular port of the tunnel device T1 installed in FW1 which is to be discriminated, for example, port 9000, to a certain destination port of the relay device T2 beyond FW1, where a WAN side port in FW1 is assumed to be yyyy1 (step 51). In this state, WAN side identification information "FW1:yyyy1" of the particular port, which is the source of the hole punching, is transmitted from the relay device T2 installed outside of the FW1 which is to be discriminated, to the tunnel device T3 installed in FW1 for reference (step 52).

Then, if a packet sent from the tunnel device T3, i.e. , FW2 to FW1:yyyy1 (step 53) has reached the particular port 9000 of the tunnel device T1 (step 54), FW1 can be discriminated to be Full Cone NAT (step 55) because FW1 permits a difference in IP address between the relay device T2 which is the destination of the hole punching and FW2 which is the source of the packet which has reached.

If the packet from the tunnel device T3 to FW1:yyyy1 has not reached (step 54), a packet is sent from a port different from the destination port of the relay device T2 to FW1:yyyy1 (step 56) . When this packet reaches (step 57), FW1 to be discriminated can be discriminated to be Restricted Cone NAT (step 58) because FW1 permit a difference in port number in the packet which has sent from the different port provided that a match is simply found in the IP address with the relay device T2 which is the destination of the hole punching packet.

If the packet has not reached from the different port of the relay device T2 to the particular port FW1:yyyy1 of the tunnel device T1 (step 57), FW1 is Port-Restricted Cone NAT or Symmetric NAT because FW1 does not permit even a difference in port number, and a discrimination is made whether FW1 is Port-Restricted Cone NAT or Symmetric NAT.

In this discrimination, a packet is sent from an adequate reference port of the tunnel device T3 to a predetermined port of the relay device T2 beyond FW2 (step 59) to convey WAN side identification information "FW2:xxxx5" of the reference port from the relay device T2 to the tunnel device T1. Also, a hole punching packet is transmitted from the same reference port of the tunnel device T3 to the particular port FW1:yyyy1 of the tunnel device T1 beyond FW2, thereby allowing packets from the particular port FW1:yyyy1 to pass through FW2 (step 60).

In this sate, the tunnel device T1 transmits a packet from the particular port 9000 to the reference port "FW2:xxxx5" of the tunnel device T3 beyond FW1 (step 61). If this packet reaches (step 62), FW1 can be discriminated to be Port-Restricted Cone NAT (step 63) because FW1 has converted the same port 9000 to the same port yyyy1 in a transmission to the relay device T2 outside of FW1 and in a transmission to the tunnel device T3, i.e., FW2. On the other hand, if the packet does not reach (step 62), FW1 can b discriminated to be Symmetric NAT (step 64) because FW1 has converted the same particular port 9000 to a different port for each different destination outside of FW1.

### [4-3. Advantages]

A described above, according to the third embodiment, the type of FW can be readily, rapidly, precisely and automatically discriminated by a simple approach, making use of each function for the essential IP telephone, or making use of the tunnel device and relay device located inside and outside of FW which is to be discriminated, the IP telephone technology of the present invention can be introduced, operated, and managed with minimal optimal settings and processing even without special knowledge, complicated manuals or manipulations. In addition, the discrimination of the NAT type, which is the basis of the NAT traversal problem, can be unitized in the introduction, settings, and designing of other systems and applications as well.

### [5. Other Embodiments]

It should be understood that the present invention is not limited to the respective embodiments described above, but also encompass other embodiments which include those illustrated below and others. For example, as the protocol and port number, the support for the conventional SIP (5060), conference device, the setting of a direct path between terminals in the same LAN or in different LANs, and the like are not essential and may be omitted.

Also, the IP telephone system of the present invention may be regarded as including the firewall. By thus configuring and introducing an IP telephone system as a total system including the firewall, a whole system which is highly consistent and excels in reliability can be implemented at a reasonable cost.

Also, in a call between terminal, and in a call among three parties through a conference device, a variety of multimedia data may be transmitted in accordance with RTP or another protocol as required, including URL which should be viewed by the counterpart, URL which is automatically opened by a web browser of the counterpart terminal, a character string of chat, moving image data, mail address, a variety of telephone numbers, positional information on mobile terminals, and data on channels and programs of the television broadcasting, in addition to speeches.

By transmitting multimedia data such as URLs, character strings of chat, moving image data and the like instead of speech or together with speech in a call or a conference through terminals, communications can be made in an optimal form in accordance with the situation with high power of expression to promote information sharing and mutual understanding.

### DESCRIPTION OF REFERENCE NUMERALS

- FW1, FW2: Firewalls
- T1, T3: Tunnel Devices
- T11, T31: Tunnel Units
- T12, T32: Call Control Units
- T2: Relay Device
- T21: Relay Unit
- T22: Call Control Unit
- C (C11, C12, C31, C32, C33): Terminal Devices (Terminals)
- C4: Call Processing Unit

## Claims

1. A tunnel device comprising a connection unit with a communication network, and a control unit for controlling a communication through said connection unit, and disposed inside of a firewall for performing a firewall traversal communication through tunneling, said tunnel device comprising:
tunnel means for mediating a communication with another tunnel device installed inside of another firewall by way of a predetermined relay device installed outside of said firewall, by said connection unit and control unit; and
call control means for processing call control for a call by an IP call terminal located inside of each firewall, by said connection unit and control unit,
said tunnel device **characterized in that** said call control means comprises at least:
(1) means for accepting a call origination request from a terminal inside of the same firewall as the tunnel device to a terminal inside of other firewall to mediate the request to the outside of the firewall by said tunnel means, (2) means for receiving a call reception request from the outside to the inside of the firewall by said tunnel means to mediate the request to a destination terminal, and (3) means for mediating transmission of speech packets by said tunnel means, in accordance with a predetermined protocol and port number in a call between terminals inside of different firewalls; and
means for mediating transmission of call origination/reception requests and speech packets in a call between terminals inside of the same firewall.

2. A tunnel device according to claim 1, **characterized in that**:
said call control means directly or indirectly provides a counterpart terminal with identification information including a private IP address and a port number of a port which is attempted by each terminal for speech packet transmission for setting a direct speech packet transmission path between the terminals when the terminals which attempt to make a call to each other are located inside of the same firewall.

3. A relay device comprising a connection unit with a communication network, and a control unit for controlling a communication through said connection unit, and disposed outside of a firewall for relaying a firewall traversal communication through tunneling, said relay device comprising:
relay means for relaying a communication between predetermined respective tunnel devices installed inside of respective firewalls, by said connection unit and control unit; and
call control means for processing call control for a call by an IP call terminal located inside of each firewall, by said connection unit and control unit,
said relay device **characterized in that**:
said call control means comprises at least means for relaying transmission of call origination/reception requests and speech packets for a call, for each of said tunnel devices corresponding to the respective terminals, using said relay means, in a call between terminals inside of different firewalls.

4. A call control system **characterized by** comprising:
the tunnel device according to claim 1 or 2; and
the relay device according to claim 3.

5. An IP call terminal device comprising manipulating means, transmitting means, receiving means, a connection unit with a communication network, and a control unit for conducting control including a communication through said control unit as well as encoding and decoding of speech, and installed inside of a firewall for making a call beyond the firewall, said terminal device **characterized in that**:
said control means comprises call processing means which serves as:
(1) means for accepting at least manipulations of call origination, call reception response, and call termination from said manipulating means;
(2) means for transmitting and receiving call control information including call origination/reception requests to and from a predetermined tunnel device installed inside of the same firewall in accordance with a predetermined protocol and port number, by said connection unit for a call with terminals located inside of the same firewall and inside of a different firewall;
(3) means for receiving and transmitting speech packets associated with a transmission in a call with a terminal inside of a different firewall in accordance with the protocol through said tunnel device; and
(4) means for performing the encoding and decoding processing during a call.

6. An IP telephone system **characterized by** comprising:
the tunnel device according to claim 1 or 2, or the call control system according to claim 4; and
the terminal device according to claim 5.

7. A relay device according to claim 3, **characterized in that**:
when terminals attempting to make a call are located inside of different firewalls from each other, said call control means receives a packet transmitted by each terminal from a port attempted for use thereby in speech packet transmission beyond the firewall to acquire identification information including a firewall outside port number of the port, and notifies respective counterpart terminals of the identification information using said relay means, in order to set a direct speech packet transmission path between these terminals.

8. A terminal device according to claim 5, **characterized in that** said call processing means further:
(1) accepts at least manipulations of call origination, call reception response, and call termination from saidmanipulating means;
(2) in a call with another terminal located inside of a different firewall, transmits a packet to a predetermined relay device installed outside of the firewall from a port attempted for use in speech packet transmission with the terminal by said connection unit, thereby notifying WAN identification information of said terminal device including a firewall outside port number of the port;
(3) sets a direct speech packet transmission path in accordance with WAN side identification information of a counterpart terminal transmitted in accordance with a predetermined protocol and port number by way of a predetermined tunnel device installed inside of the same firewall; and
(4) performs the encoding and decoding processing during a call, by said control unit.

9. An IP telephone system **characterized by** comprising:
the relay device according to claim 7; and
the terminal device according to claim 8.

10. A terminal device according to claim 8, **characterized in that**:
when said control unit detects that a speech packet has reached from the counterpart terminal or that a speech packet does not reach within a predetermined waiting time after notification or receipt of the WAN side identification information, said call processing means notifies said relay device that the speech packet has reached or does not reach in accordance with the predetermined protocol and port number by way of said tunnel device.

11. A relay device according to claim 7, **characterized in that**:
when said call control means is not notified from any of said terminal devices which attempt to make a call that the speech packet has reached within the predetermined waiting time, or is notified that the speech packet does not reach, said call control means sets an alternative bypass path by way of said tunnel device for a speech packet transmission path associated with the notification using said relay means.

12. An IP telephone system **characterized by** comprising:
the terminal device according to claim 10; and
the relay device according to claim 11.

13. A tunnel device according to claim 1 or 2, **characterized by** comprising, by said connection unit and control unit:
SIP proxy means for communicating with each terminal inside of the firewall using a predetermined second port number as a proxy server of SIP (Session Initiation Protocol); and
mediating means for mediating a communication between a terminal which utilizes the protocol and port number and a terminal which utilizes the SIP and the second port number.

14. A tunnel device according to claim 13, **characterized in that**:
when said call control means mediates a speech packet transmission in a call with a counterpart terminal inside of a different firewall for a terminal inside of the same firewall, said call control means sets a transmission path between the terminal and said tunnel device by call control using the SIP and second port number and passes by way of the transmission path.

15. A call control system **characterized by** comprising:
the relay device according to any of claim 3, 7 or 11; and
the tunnel device according to claim 13 or 14.

16. A conference device comprising a connection unit with a communication network, and a control unit for controlling a communication through said connection unit, for mediating a connection of a call among three or more parties in a plurality of terminals, said conference device **characterized in that** said control unit comprises:
(1) manipulation accepting means for accepting at least designation of each participant and a request for start, and manipulations associated with a response to a request or a response to reception, and call termination from terminals of participants including a convocator through said connection unit;
(2) setting means for setting a pair of speech packet transmission paths for collecting an uplink speech directly or by way of a tunnel device and for delivering a downlink speech by transmitting and receiving call control information through a direct or an indirect communication with a predetermined tunnel device installed inside of the same firewall or a predetermined relay device installed outside of the firewall for each terminal of each of other participants located inside of the same firewall and inside of different firewalls through said connection unit;
(3) combining means for combining speech signals of the respective uplink speeches received from the other respective participant for each combination of the respective participants except for one participant through addition processing; and
(4) delivering means for delivering the combined speech signal to a terminal of the one participant through said connection unit.

17. An IP telephone system **characterized by** adding the
conference device according to claim 16 to one of:
the tunnel device according to any of claim 1, 2, 13 or 14;
the relay device according to any of claim 3, 7 or 11;
the call control system according to claim 4 or 15;
the terminal device according to any of claim 5, 8 or 10; and
the IP telephone system according to any of claim 6, 9 or 12.

18. An IP telephone system **characterized by** adding one or two or more firewall devices to one of:
the tunnel device according to any of claim 1, 2, 13 or 14;
the relay device according to any of claim 3, 7 or 11;
the call control system according to claim 4 or 15;
the terminal device according to any of claim 5, 8 or 10; and
the IP telephone system according to any of claim 6, 9, 12 or 16.

19. An IP telephone system comprising:
the tunnel device according to any of claim 1, 2, 13 or 14;
the relay device according to any of claim 3, 7 or 11; and
the terminal device according to any of claim 5, 8 or 10, said IP telephone system **characterized in that**:
when a direct speech packet transmission path is to be set between terminals inside of different firewalls, a test packet is transmitted to said relay device beyond the firewall from a speech packet reception port of a source terminal, and the firewall associated with the source terminal is discriminated to be Full Cone NAT if a speech packet reaches from a counterpart terminal within a first predetermined time, in association with said respective control units of said tunnel device, relay device, and said terminal device.

20. An IP telephone system according to claim 19,
**characterized in that**:
when no packet has reached from the counterpart terminal in the first predetermined time, an attempt is made to transmit a hole punching packet from the reception port of the source terminal to a port different from a port of WAN side identification information of a transmission port of the counterpart terminal, and the firewall associated with the source terminal is discriminated to be Restricted Cone NAT if a speech packet eventually reaches in a second predetermined time from the counterpart terminal, in association with said respective control units of said tunnel device, relay device, and said terminal device.

21. An IP telephone system according to claim 20,
**characterized in that**:
when no speech packet reaches from the counterpart terminal in the second predetermined time, a hole punching packet is transmitted from the reception port of the source terminal to the port of the WAN side identification information of the transmission port of the counterpart terminal, and the firewall associated with the source terminal is discriminated to be Port-Restricted Cone if a speech packet eventually reaches from the counterpart terminal in a third predetermined time, in association with said respective control units of said tunnel device, relay device, and said terminal device, and
the firewall associated with the source terminal is discriminated to be Symmetric NAT if no speech packet cannot received from the counterpart terminal in the third predetermined time even in this case.

22. An IP telephone system comprising:
the tunnel device according to any of claim 1, 2, 13 or 14; and
the relay device according to any of claim 3, 7 or 11, said IP telephone system **characterized in that**:
in association with said respective control units of said tunnel device, relay device, and said terminal device,
a hole punching packet is transmitted from a particular port of a tunnel device installed inside of a firewall to be discriminated to a certain destination port of a relay device installed outside of the firewall to be discriminated for performing hole punching using a reference firewall which is Full Cone NAT, Restricted Cone NAT, or Port-Restricted Cone NAT,
said relay device conveys WAN side identification information of the firewall to be discriminated of the particular port to a reference tunnel device installed inside of the reference firewall, and
the firewall to be discriminated is discriminated to be Full Cone NAT if a packet sent from the reference tunnel device reaches the particular port.

23. An IP telephone system according to claim 22,
**characterized in that**:
when no packet has reached from said reference tunnel device to the particular port, said firewall to be discriminated is discriminated to be Restricted Cone NAT if a packet sent from a port different from the destination port of said relay device reaches the particular port.

24. An IP telephone system according to claim 23,
**characterized in that**:
when no packet has reached from the different port to the particular port,
a packet is sent from a reference port selected by said reference tunnel device to the relay device to convey WAN side identification information of the reference port from the relay device to the tunnel device,
a hole punching packet is transmitted from the same reference port of the reference tunnel device to the particular port to permit a packet from the particular port to pass through the reference firewall, and
the firewall to be discriminated is discriminated to be Port-Restricted Cone NAT if a packet transmitted by the tunnel device from a particular port reaches the reference port, and is discriminated to be Symmetric NAT if the packet does not reach.

25. A method of controlling a tunnel device comprising a connection unit with a communication network, and a control unit for controlling a communication through said connection unit, and disposed inside of a firewall for performing a firewall traversal communication through tunneling, said method comprising:
tunnel processing for mediating a communication with another tunnel device installed inside of another firewall by way of a predetermined relay device installed outside of said firewall, by said connection unit and control unit; and
call control processing for processing call control for a call by an IP call terminal located inside of each firewall, by said connection unit and control unit,
said method **characterized in that** said call control processing comprises at least:
(1) processing for accepting a call origination request from a terminal inside of the same firewall as the tunnel device to a terminal inside of other firewall to mediate the request to the outside of the firewall by said tunnel processing, (2) processing for receiving a call reception request from the outside to the inside of the firewall by said tunnel processing to mediate the request to a destination terminal, and (3) processing for mediating transmission of speech packets by said tunnel processing, in accordance with a predetermined protocol and port number in a call between terminals inside of different firewalls; and
processing for mediating transmission of call origination/reception requests and speech packets in a call between terminals inside of the same firewall.

26. A method of controlling a tunnel device according to claim 25, **characterized in that**:
said call control processing directly or indirectly provides a counterpart terminal with identification information including a private IP address and a port number of a port which is attempted by each terminal for speech packet transmission for setting a direct speech packet transmission path between the terminals when the terminals which attempt to make a call to each other are located inside of the same firewall.

27. A method of controlling a relay device comprising a connection unit with a communication network, and a control unit for controlling a communication through said connection unit, and disposed outside of a firewall for relaying a firewall traversal communication through tunneling, said method comprising:
relay processing for relaying a communication between predetermined respective tunnel devices installed inside of respective firewalls, by said connection unit and control unit; and
call control processing for processing call control for a call by an IP call terminal located inside of each firewall, by said connection unit and control unit,
said method **characterized in that**:
said call control processing includes at least processing for relaying transmission of call origination/reception requests and speech packets for a call, for each of said tunnel devices corresponding to the respective terminals, using said relay processing, in a call between terminals inside of different firewalls.

28. A method of controlling a call control system
**characterized by** combining:
the method of controlling a tunnel device according to claim 25 or 26; and
the method of controlling relay device according to claim 27.

29. A method of controlling a terminal device comprising manipulating means, transmitting means, receiving means, a connection unit with a communication network, and a control unit for conducting control including a communication through said control unit as well as encoding and decoding of speech, and installed inside of a firewall for making a call beyond the firewall, said method **characterized by** performing call processing by said control unit, including:
(1) processing for accepting at least manipulations of call origination, call reception response, and call termination from said manipulating means;
(2) processing for transmitting and receiving call control information including call origination/reception requests to and from a predetermined tunnel device installed inside of the same firewall in accordance with a predetermined protocol and port number, by said connection unit for a call with terminals located inside of the same firewall and inside of a different firewall;
(3) processing for receiving and transmitting speech packets associated with a transmission in a call with a terminal inside of a different firewall in accordance with the protocol through said tunnel device; and
(4) processing for performing the encoding and decoding processing during a call.

30. A method of controlling an IP telephone system
**characterized by** combining:
the method of controlling a tunnel device according to claim 25 or 26, or the method of controlling a call control system according to claim 28; and
the method of controlling a terminal device according to claim 29.

31. A method of controlling a relay device according to claim 27, **characterized in that**:
when terminals attempting to make a call are located inside of different firewalls from each other, said call control processing receives a packet transmitted by each terminal from a port attempted for use thereby in speech packet transmission beyond the firewall to acquire identification information including a firewall outside port number of the port, and notifies respective counterpart terminals of the identification information using said relay processing, in order to set a direct speech packet transmission path between these terminals.

32. A method of controlling a terminal device according to claim 29, **characterized in that** said call processing further performs , by said control unit:
(1) accepts at least manipulations of call origination, call reception response, and call termination from saidmanipulating means;
(2) in a call with another terminal located inside of a different firewall, transmits a packet to a predetermined relay device installed outside of the firewall from a port attempted for use in speech packet transmission with the terminal by said connection unit, thereby notifying WAN identification information of said terminal device including a firewall outside port number of the port;
(3) sets a direct speech packet transmission path in accordance with WAN side identification information of a counterpart terminal transmitted in accordance with a predetermined protocol and port number by way of a predetermined tunnel device installed inside of the same firewall; and
(4) performs the encoding and decoding processing during a call.

33. A method of controlling an IP telephone system combining:
the method of controlling a relay device according to claim 31; and
the method of controlling a terminal device according to claim 32.

34. A method of controlling a terminal device according to claim 32, **characterized in that**:
when said control unit detects that a speech packet has reached from the counterpart terminal or that a speech packet does not reach within a predetermined waiting time after notification or receipt of the WAN side identification information, said call processing notifies said relay device that the speech packet has reached or does not reach in accordance with the predetermined protocol and port number by way of said tunnel device.

35. A method of controlling a relay device according to claim 31, **characterized in that**:
when there is no notification from any of said terminal devices which attempt to make a call that the speech packet has reached within the predetermined waiting time, or when there is a notification that the speech packet does not reach, said call control processing sets an alternative bypass path by way of said tunnel device for a speech packet transmission path associated with the notification using said relay processing.

36. A method of controlling an IP telephone system
**characterized by** combining:
the method of controlling a terminal device according to claim 34; and
the method of controlling a relay device according to claim 35.

37. A method of controlling a tunnel device according to claim 25 or 26, **characterized by** comprising, by said connection unit and control unit:
SIP proxy processing for communicating with each terminal inside of the firewall using a predetermined second port number as a proxy server of SIP (Session Initiation Protocol); and
mediation processing for mediating a communication between a terminal which utilizes the protocol and port number and a terminal which utilizes the SIP and the second port number.

38. A method of controlling a tunnel device according to claim 37, **characterized in that**:
when said call control processing mediates a speech packet transmission in a call with a counterpart terminal inside of a different firewall for a terminal inside of the same firewall, said call control processing sets a transmission pathbetween the terminal and said tunnel device by call control using the SIP and second port number and passes by way of the transmission path.

39. A method of controlling a call control system
**characterized by** combining:
the method of controlling a relay device according to any of claim 27, 31 or 35; and
the method of controlling a tunnel device according to claim 37 or 38.

40. A method of controlling a conference device comprising a connection unit with a communication network, and a control unit for controlling a communication through said connection unit, for mediating a connection of a call among three or more parties in a plurality of terminals, said method **characterized by** comprising, by said control unit:
(1) manipulation accepting processing for accepting at least designation of each participant and a request for start, and manipulations associated with a response to a request or a response to reception, and call termination from terminals of participants including a convocator through said connection unit;
(2) setting processing for setting a pair of speech packet transmission paths for collecting an uplink speech directly or by way of a tunnel device and for delivering a downlink speech by transmitting and receiving call control information through a direct or an indirect communication with a predetermined tunnel device installed inside of the same firewall or a predetermined relay device installed outside of the firewall for each terminal of each of other participants located inside of the same firewall and inside of different firewalls through said connection unit;
(3) combination processing for combining speech signals of the respective uplink speeches received from the other respective participant for each combination of the respective participants except for one participant through addition processing; and
(4) deliver processing for delivering the combined speech signal to a terminal of the one participant through said connection unit.

41. A method of controlling an IP telephone system
**characterized by** adding the conference device according to claim 40 to one of:
the method of controlling a tunnel device according to any of claim 25, 26, 37 or 38;
the method of controlling a relay device according to any of claim 27, 31 or 35;
the method of controlling a call control system according to claim 28 or 39;
the method of controlling a terminal device according to any of claim 29, 32 or 34; and
the method of controlling an IP telephone system according to any of claim 30, 33 or 36.

42. A method of controlling an IP telephone system
**characterized by** adding a method of controlling one or two or more firewall devices to one of:
the method of controlling a tunnel device according to any of claim 25, 26, 37 or 38;
the method of controlling a relay device according to any of claim 27, 31 or 35;
the method of controlling a call control system according to claim 28 or 39;
the method of controlling a terminal device according to any of claim 29, 32 or 34; and
the method of controlling an IP telephone system according to any of claim 30, 33, 36 or 40.

43. A method of controlling an IP telephone system comprising:
the method of controlling a tunnel device according to any of claim 25, 26, 37 or 38;
the method of controlling a relay device according to any of claim 27, 31 or 35; and
the method of controlling a terminal device according to any of claim 29, 32 or 34,
said method **characterized by**:
transmitting a test packet to said relay device beyond the firewall from a speech packet reception port of a source terminal when a direct speech packet transmission path is to be set between terminals inside of different firewalls, and discriminating the firewall associated with the source terminal to be Full Cone NAT if a speech packet reaches from a counterpart terminal within a first predetermined time, in association with said respective control units of said tunnel device, relay device, and said terminal device.

44. A method of controlling an IP telephone system according
to claim 43, **characterized by**:
attempting to transmit a hole punching packet from the reception port of the source terminal to a port different from a port of WAN side identification information of a transmission port of the counterpart terminal when no packet has reached from the counterpart terminal in the first predetermined time, and discriminating the firewall associated with the source terminal to be Restricted Cone NAT if a speech packet eventually reaches in a second predetermined time from the counterpart terminal, in association with said respective control units of said tunnel device, relay device, and said terminal device.

45. A method of controlling an IP telephone system according to claim 44, **characterized by**:
transmitting a hole punching packet from the reception port of the source terminal to the port of the WAN side identification information of the transmission port of the counterpart terminal when no speech packet reaches from the counterpart terminal in the second predetermined time, and discriminating the firewall associated with the source terminal to be Port-Restricted Cone NAT if a speech packet eventually reaches from the counterpart terminal in a third predetermined time, in association with said respective control units of said tunnel device, relay device, and said terminal device, and
discriminating the firewall associated with the source terminal to be Symmetric NAT if no speech packet cannot received from the counterpart terminal in the third predetermined time even in this case.

46. A method of controlling an IP telephone system comprising:
the method of controlling tunnel device according to any of claim 25, 26, 37 or 38; and
the method of controlling a relay device according to any of claim 27, 31 or 35,
said method **characterized by**:
in association with said respective control units of said tunnel device, relay device, and said terminal device,
transmitting a hole punching packet from a particular port of a tunnel device installed inside of a firewall to be discriminated to a certain destination port of a relay device installed outside of the firewall to be discriminated for performing hole punching using a reference firewall which is Full Cone NAT, Restricted Cone NAT, or Port-Restricted Cone NAT;
conveying WAN side identification information of the firewall to be discriminated of the particular port from said relay device to a reference tunnel device installed inside of the reference firewall; and
discriminating the firewall to be discriminated to be Full Cone NAT if a packet sent from the reference tunnel device reaches the particular port.

47. A method of controlling an IP telephone system according to claim 46, **characterized by**:
when no packet has reached from said reference tunnel device to the particular port, discriminating said firewall to be discriminated to be Restricted Cone NAT if a packet sent from a port different from the destination port of said relay device reaches the particular port.

48. A method of controlling an IP telephone system according to claim 47, **characterized by**:
when no packet has reached from the different port to the particular port,
sending a packet from a reference port selected by said reference tunnel device to the relay device to convey WAN side identification information of the reference port from the relay device to the tunnel device,
transmitting a hole punching packet from the same reference port of the reference tunnel device to the particular port to permit a packet from the particular port to pass through the reference firewall, and
discriminating the firewall to be discriminated to be Port-Restricted Cone NAT if a packet transmitted by the tunnel device from a particular port reaches the reference port, and is discriminated to be Symmetric NAT if the packet does not reach.

49. A program for controlling a tunnel device comprising a connection unit with a communication network, and a control unit for controlling a communication through said connection unit, and disposed inside of a firewall for performing a firewall traversal communication through tunneling, said program causing said connection unit and control unit to perform:
tunnel processing for mediating a communication with another tunnel device installed inside of another firewall by way of a predetermined relay device installed outside of said firewall, by said connection unit and control unit; and
call control processing for processing call control for a call by an IP call terminal located inside of each firewall by said connection unit and control unit,
said program **characterized in that** said call control processing comprises at least:
(1) processing for accepting a call origination request from a terminal inside of the same firewall as the tunnel device to mediate the request to the outside of the firewall by said tunnel processing, (2) processing for receiving a call reception request from the outside to the inside of the firewall by said tunnel processing to mediate the request to a destination terminal, and (3) processing for mediating transmission of speech packets by said tunnel processing, in accordance with a predetermined protocol and port number in a call between terminals inside of different firewalls ; and
processing for mediating transmission of call origination/reception requests and speech packets in a call between terminals inside of the same firewall.

50. A program for controlling a tunnel device according to claim 49, **characterized in that**:
said call control processing directly or indirectly provides a counterpart terminal with identification information including a private IP address and a port number of a port which is attempted by each terminal for speech packet transmission for setting a direct speech packet transmission path between the terminals when the terminals which attempt to make a call to each other are located inside of the same firewall.

51. A program for controlling a relay device comprising a connection unit with a communication network, and a control unit for controlling a communication through said connection unit, and disposed outside of a firewall for relaying a firewall traversal communication through tunneling, said program causing said connection unit and control unit to perform:
relay processing for relaying a communication between predetermined respective tunnel devices installed inside of respective firewalls, by said connection unit and control unit; and
call control processing for processing call control for a call by an IP call terminal located inside of each firewall, by said connection unit and control unit,
said program **characterized in that**:
said call control processing includes at least processing for relaying transmission of call origination/reception requests and speech packets for a call, for each of said tunnel devices corresponding to the respective terminals, using said relay processing, in a call between terminals inside of different firewalls.

52. A program for controlling a call control system **characterized by** combining:
the program for controlling a tunnel device according to claim 49 or 50; and
the program for controlling relay device according to claim 51.

53. A program for controlling a terminal device comprising manipulating means, transmitting means, receiving means, a connection unit with a communication network, and a control unit for conducting control including a communication through said connection unit as well as encoding and decoding of speech, and installed inside of a firewall for making a call beyond the firewall, said program **characterized by** causing said control unit to perform call control processing including:
(1) processing for accepting at least manipulations of call origination, call reception response, and call termination from said manipulating means;
(2) processing for transmitting and receiving call control information including call origination/reception requests to and from a predetermined tunnel device installed inside of the same firewall in accordance with a predetermined protocol and port number, by said connection unit for a call with terminals located inside of the same firewall and inside of a different firewall;
(3) processing for receiving and transmitting speech packets associated with a transmission in a call with a terminal inside of a different firewall in accordance with the protocol through said tunnel device; and
(4) processing for performing the encoding and decoding processing during a call.

54. A program for controlling an IP telephone system **characterized by** combining:
the program for controlling a tunnel device according to claim 49 or 50, or the program for controlling a call control system according to claim 52; and
the program for controlling a terminal device according to claim 53.

55. A program for controlling a relay device according to claim 51, **characterized in that**:
when terminals attempting to make a call are located inside of different firewalls from each other, said call control processing receives a packet transmitted by each terminal from a port attempted for use thereby in speech packet transmission beyond the firewall to acquire identification information including a firewall outside port number of the port, and notifies respective counterpart terminals of the identification information using said relay processing, in order to set a direct speech packet transmission path between these terminals.

56. A program for controlling a terminal device according to claim 53, **characterized in that** said call processing further performs, by said control unit:
(1) accepts at least manipulations of call origination, call reception response, and call termination from said manipulating means;
(2) in a call with another terminal located inside of a different firewall, transmits a packet to a predetermined relay device installed outside of the firewall from a port attempted for use in speech packet transmission with the terminal by said connection unit, thereby notifying WAN identification information of the source terminal side including a firewall outside port number of the port;
(3) sets a direct speech packet transmission path in accordance with WAN side identification information of a counterpart terminal transmitted in accordance with a predetermined protocol and port number by way of a predetermined tunnel device installed inside of the same firewall; and
(4) performs the encoding and decoding processing during a call.

57. A program for controlling an IP telephone system combining:
the program for controlling a relay device according to claim 55; and
the program for controlling a terminal device according to claim 56.

58. A program for controlling a terminal device according to claim 56, **characterized in that**:
when said control unit detects that a speech packet has reached from the counterpart terminal or that a speech packet does not reach within a predetermined waiting time after notification or receipt of the WAN side identification information, said call processing notifies said relay device that the speech packet has reached or does not reach in accordance with the predetermined protocol and port number by way of said tunnel device.

59. A program for controlling a relay device according to claim 55, **characterized in that**:
when there is no notification from any of said terminal devices which attempt to make a call that the speech packet has reached within the predetermined waiting time, or when there is a notification that the speech packet does not reach, said call control processing sets an alternative bypass path by way of said tunnel device for a speech packet transmission path associated with the notification using said relay processing.

60. A program for controlling an IP telephone system **characterized by** combining:
the program for controlling a terminal device according to claim 58; and
the program for controlling a relay device according to claim 59.

61. A program for controlling a tunnel device according to claim 49 or 50, **characterized by** causing said connection unit and control unit to perform:
SIP proxy processing for communicating with each terminal inside of the firewall using a predetermined second port number as a proxy server of SIP (Session Initiation Protocol); and
mediation processing for mediating a communication between a terminal which utilizes the protocol and port number and a terminal which utilizes the SIP and the second port number.

62. A program for controlling a tunnel device according to claim 61, **characterized in that**:
when said call control processingmediates a speech packet transmission in a call with a counterpart terminal inside of a different firewall for a terminal inside of the same firewall, said call control processing sets a transmission path between the terminal and said tunnel device by call control using the SIP and second port number and passes by way of the transmission path.

63. A program for controlling a call control system **characterized by** combining:
the program for controlling a relay device according to any of claim 51, 55 or 59; and
the program for controlling a tunnel device according to claim 61 or 62.

64. A program for controlling a conference device comprising a connection unit with a communication network, and a control unit for controlling a communication through said connection unit, for mediating a connection of a call among three or more parties in a plurality of terminals, said program **characterized by** causing said control unit to perform:
(1) manipulation accepting processing for accepting at least designation of each participant and a request for start, and manipulations associated with a response to a request or a response to reception, and call termination from terminals of participants including a convocator through said connection unit;
(2) setting processing for setting a pair of speech packet transmission paths for collecting an uplink speech directly or by way of a tunnel device and for delivering a downlink speech by transmitting and receiving call control information through a direct or an indirect communication with a predetermined tunnel device installed inside of the same firewall or a predetermined relay device installed outside of the firewall for each terminal of each of other participants located inside of the same firewall and inside of different firewalls through said connection unit;
(3) combination processing for combining speech signals of the respective uplink speeches received from the other respective participant for each combination of the respective participants except for one participant by addition processing; and
(4) deliver processing for delivering the combined speech signal to a terminal of the one participant through said connection unit.

65. A program for controlling an IP telephone system
**characterized by** adding the conference device according to claim 64 to one of:
the program for controlling a tunnel device according to any of claim 49, 50, 61 or 62;
the program for controlling a relay device according to any of claim 51, 55 or 59;
the program for controlling a call control system according to claim 52 or 63;
the program for controlling a terminal device according to any of claim 53, 56 or 58; and
the program for controlling an IP telephone system according to any of claim 54, 57 or 60.

66. A program for controlling an IP telephone system
**characterized by** adding a method of controlling one or two or more firewall devices to one of:
the program for controlling a tunnel device according to any of claim 49, 50, 61 or 62;
the program for controlling a relay device according to any of claim 51, 55 or 59;
the program for controlling a call control system according to claim 52 or 63;
the program for controlling a terminal device according to any of claim 53, 56 or 58; and
the program for controlling an IP telephone system according to any of claim 54, 57, 60 or 64.

67. A program for controlling an IP telephone system comprising, in combination:
the program for controlling a tunnel device according to any of claim 49, 50, 61 or 62;
the program for controlling a relay device according to any of claim 51, 55 or 59; and
the program for controlling a terminal device according to any of claim 53, 56 or 58;
said program **characterized by**:
transmitting a test packet to said relay device beyond the firewall from a speech packet reception port of a source terminal when a direct speech packet transmission path is to be set between terminals inside of different firewalls, and discriminating the firewall associated with the source terminal to be Full Cone NAT if a speech packet reaches from a counterpart terminal within a first predetermined time, in association with said respective control units of said tunnel device, relay device, and said terminal device.

68. A program for controlling an IP telephone system according to claim 67, **characterized by**:
attempting to transmit a hole punching packet from the reception port of the source terminal to a port different from a port of WAN side identification information of a transmission port of the counterpart terminal when no packet has reached from the counterpart terminal in the first predetermined time, and discriminating the firewall associated with the source terminal to be Restricted Cone NAT if a speech packet eventually reaches in a second predetermined time from the counterpart terminal, in association with said respective control units of said tunnel device, relay device, and said terminal device.

69. A program for controlling an IP telephone system according to claim 68, **characterized by**:
transmitting a hole punching packet from the reception port of the source terminal to the port of the WAN side identification information of the transmission port of the counterpart terminal when no speech packet reaches from the counterpart terminal in the second predetermined time, and discriminating the firewall associated with the source terminal to be Port-Restricted Cone NAT if a speech packet eventually reaches from the counterpart terminal in a third predetermined time, in association with said respective control units of said tunnel device, relay device, and said terminal device, and
discriminating the firewall associated with the source terminal to be Symmetric NAT if no speech packet cannot received from the counterpart terminal in the third predetermined time even in this case.

70. A program for controlling an IP telephone system comprising, in combination:
the program for controlling tunnel device according to any of claim 49, 50, 61 or 62; and
the program for controlling a relay device according to any of claim 52, 55 or 59,
said program **characterized by**:
in association with said respective control units of said tunnel device, relay device, and said terminal device,
transmitting a hole punching packet from a particular port of a tunnel device installed inside of a firewall to be discriminated to a certain destination port of a relay device installed outside of the firewall to be discriminated for performing hole punching using a reference firewall which is Full Cone NAT, Restricted Cone NAT, or Port-Restricted Cone NAT;
conveying WAN side identification information of the firewall to be discriminated of the particular port from said relay device to a reference tunnel device installed inside of the reference firewall; and
discriminating the firewall to be discriminated to be Full Cone NAT if a packet sent from the reference tunnel device reaches the particular port.

71. A program for controlling an IP telephone system according to claim 70, **characterized by**:
when no packet has reached from said reference tunnel device to the particular port, discriminating said firewall to be discriminated to be Restricted Cone NAT if a packet sent from a port different from the destination port of said relay device reaches the particular port.

72. An IP telephone system according to claim 71,
**characterized by**:
when no packet has reached from the different port to the particular port,
sending a packet from a reference port selected by said reference tunnel device to the relay device to convey WAN side identification information of the reference port from the relay device to the tunnel device,
transmitting a hole punching packet from the same reference port of the reference tunnel device to the particular port to permit a packet from the particular port to pass through the reference firewall, and
discriminating the firewall to be discriminated to be Port-Restricted Cone NAT if a packet transmitted by the tunnel device from a particular port reaches the reference port, and is discriminated to be Symmetric NAT if the packet does not reach.

73. A program for controlling a terminal device according to any of claim 53, 56 or 58, **characterized by** transmitting and receiving multimedia data including one or more of URL, character strings of a chat, moving image data, a mail address, a variety of telephone numbers, information on the position of amobile terminal, and data on a channel or a program of television broadcasting, in place of a speech or together with a speech in a call with another terminal.

74. A program for controlling a conference device according to claim 64, **characterized by** providing or mediating multimedia data including one or more of URL, character strings of a chat, moving image data, a mail address, a variety of telephone numbers, information on the position of a mobile terminal, and data on a channel or a program of television broadcasting, in place of a speech or together with a speech in a call between terminals or with a terminal.

75. A method of controlling an IP telephone system according to any of claim 30, 33, 36, 41 or 42, **characterized in that** a terminal transmits and receives multimedia data including one or more of URL, character strings of a chat, moving image data, a mail address, a variety of telephone numbers, information on the position of a mobile terminal, and data on a channel or a program of television broadcasting, in place of a speech or together with a speech.
